# EUROPÄISCHE PATENTSCHRIFT

(11) **EP 2 651 670 B1**
(45) Veröffentlichungstag und Bekanntmachung des Hinweises auf die Patenterteilung: **04.07.2018**
(21) Anmeldenummer: 11787618.5
(22) Anmeldetag: 22.11.2011
(51) Int. Cl.: B60G 17/052

(54) **LUFTFEDERANLAGE, DRUCKLUFTVERSORGUNGSANLAGE UND PNEUMATISCHES SYSTEM**
AIR SPRING, AIR SUPPLY SYSTEM AND PNEUMATIC SYSTEM
SUSPENSION D'AIR, SYSTÈME D'ALIMENTATION D'AIR ET SYSTÈME PNEUMATIQUE

(30) Priorität: 16.12.2010 DE 102010054705
(43) Veröffentlichungstag der Anmeldung: 23.10.2013
(73) Patentinhaber: WABCO GmbH, 30453 Hannover (DE)
(72) Erfinder: FRANK, Dieter, 30171 Hannover (DE); MEISSNER, Frank, 30453 Hannover (DE); STABENOW, Uwe, 30880 Laatzen (DE)
(74) Vertreter: Lauerwald, Jörg
(86) Internationale Anmeldenummer: PCT/EP2011/005866
(87) Internationale Veröffentlichungsnummer: WO 2012/079691

(56) Entgegenhaltungen:
- DE-A1- 10 240 358
- DE-A1-102008 011 543
- DE-T2- 69 208 470
- GB-A- 2 292 916
- JP-A- 1 141 112

## Beschreibung

Die Erfindung betrifft eine Luftfederanlage mit einer Pneumatikanlage gemäß dem Oberbegriff des Anspruchs 1 und eine Druckluftversorgungsanlage gemäß dem Oberbegriff des Anspruchs 14. Weiter betrifft die Erfindung ein pneumatisches System mit einer solchen Luftfederanlage und Druckluftversorgungsanlage gemäß dem Oberbegriff des Anspruchs 15.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbälgen, die mit zunehmender Befüllung den Fahrzeugaufbau anheben und entsprechend mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Vorzugsweise werden solche Systeme zunehmend in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Um einen langfristigen Betrieb der Druckluftversorgungsanlage sicherzustellen weist eine Pneumatikhauptleitung einen Lufttrockner auf, mit dem die Druckluft zu trocknen ist. Dadurch wird die Ansammlung von Feuchtigkeit im Pneumatiksystem vermieden.

Feuchtigkeit kann bei vergleichsweise niedrigen Temperaturen zu ventilschädigender Kristallbildung und sonstigen unerwünschten Effekten in der Druckluftversorgungsanlage und in der Pneumatikanlage führen. Ein Lufttrockner weist ein Trockenmittel auf, üblicherweise eine Granulatschüttung, welche von der Druckluft durchströmbar ist, so dass die Granulatschüttung in der Druckluft enthaltene Feuchtigkeit durch Adsorption aufnehmen kann. Ein Lufttrockner kann gegebenenfalls als regenerativer Lufttrockner ausgelegt werden. Dies kann dadurch geschehen, dass die Granulatschüttung bei jedem Entlüftungszyklus mit der getrockneten Druckluft aus der Pneumatikanlage, insbesondere einer Luftfederanlage, im Gegenstrom oder Gleichstrom, relativ zur Befüllrichtung, durchströmt wird. Eine Regeneration des Lufttrockners wird im Wesentlichen durch einen Druckwechsel am Lufttrockner ermöglicht, wobei ein im Vergleich zur Adsorption bei der Regeneration vorliegender Druck regelmäßig geringer ist, um eine Feuchtigkeitsabgabe aus dem Granulat zu ermöglichen. Dazu kann die Entlüftungsventilanordnung geöffnet werden, wobei die Regenerationsfähigkeit des Lufttrockners regelmäßig von den Druckverhältnissen und dem Druckwechsel in der Druckluftversorgungsanlage abhängig ist. Auch für eine solche sogenannte Druckwechseladsorption hat es sich als wünschenswert erwiesen, eine Druckluftversorgungsanlage flexibel und gleichzeitig verlässlich auszulegen. Insbesondere soll einerseits eine vergleichsweise schnelle Entlüftung ermöglicht werden und dennoch ein für eine Regeneration des Lufttrockners ausreichend niedriger Luftdruck zur Verfügung stehen. Die DE 692 08 470 T2 offenbart ein Gasfederungssystem mit einem Kompressor, einem Druckluftspeicher, einem Lufttrockner und mehreren Luftfederbalge. welche durch Balgventile von einer Zuleitung getrennt werden. Zwischen der Verbindungsleitung des Lufttrockners und dem Druckluftspeicher ist ein einziges in Richtung des Druckluftspeichers öffnendes Rückschlagventil angeordnet. Zwischen dem Druckluftspeicher und der Zuleitung zu den Luftfederbalgen sind ein in Richtung der Zuleitung öffnendes Rückschlagventil und ein schaltbares 2/2-Wege-Magnetventil angeordnet. Zwischen der Zuleitung zu den Balgen sind ein schaltbares 2/2-Wege-Magnetventil und ein in Richtung zum Lufttrockner angeordnetes Rückschlagventil angeordnet.

Die GB 2 292 916 A beschreibt ein Luftfedersystem mit dem Gasfederungssystem der DE 692 08 470 T2 vergleichbaren Schaltungsaufbau mit Kompressor, Lufttrockner, Druckluftspeicher und Zuleitung zu den Luftfederbälgen. Die Verbindung zwischen dem Lufttrockner und dem Druckluftspeicher und der Zuleitung zu den Luftfederbalgen ist ebenfalls durch 3 Rückschlagventile und zwei 2/2-Wege-Magnetventilen erreichbar.

Aus DE 35 429 74 A1 der Anmelderin ist eine mit Luftfiltern versehene Niveauregeleinrichtung für Fahrzeuge bekannt, mit der in Abhängigkeit von der Fahrzeugbelastung ein vorgegebener Abstand der Fahrzeugzelle von der Fahrzeugachse durch Auffüllen oder Entleeren der Luftfedern eingestellt werden kann. Die Einrichtung hat ein mit dem Druck in den Luftfedern steuerbares Sicherheitsventil. Eine Regeneration des Lufttrockners ist bei einer solchen Anlage über eine Drossel und ein gegen eine Befüllrichtung zu öffnendes Rückschlagventil möglich.

DE 199 11 933 B4 offenbart eine Druckluftversorgungsanlage mit einem Lufttrockner mit einer ersten Druckluftversorgungsleitung, wobei die Druckluft durch ein Trockenmittel des Lufttrockners geleitet wird und mit einer zweiten Druckluftversorgungsleitung, deren Beströmung möglich ist, ohne dass die Druckluft durch das Trockenmittel geleitet wird.

Aus dem Stand der Technik sind verschiedenste Ansätze bekannt, eine pneumatische Verbindung zwischen einer eingangs genannten Druckluftzuführung und einer eingangs genannten Pneumatikanlage auszulegen. Diese berücksichtigen die Grundfunktionen einer Druckluftversorgungsanlage beim Belüften der Pneumatikanlage und Entlüften der Pneumatikanlage. Hinsichtlich des oben genannten Bedarfs einer vergleichsweise schnellen Entlüftung mit dennoch für eine Regeneration des Lufttrockners ausreichend niedrigem Luftdruck sind diese jedoch noch verbesserungswürdig.

DE 102 23 405 B4 offenbart ein Luftfedersystem eines Kraftfahrzeugs mit einer Druckluftversorgungsanlage aufweisend eine Druckleitung zur Verbindung eines Kompressors mit den Luftfedern und eine Entlüftungsleitung, über welche die Druckleitung mittels eines Schaltventils absperrbar mit der Atmosphäre verbindbar ist. Zwischen einem Trockner und Niveauregelventilen einer Galerie der Luftfederanlage ist ein als pneumatische Parallelschaltung ausgebildeter Abschnitt der Druckleitung vorgesehen, in dem eine Drossel parallel zu einem Rückschlagventil und parallel zu einem weiteren Schaltventil angeordnet ist. Das Schaltventil in der Entlüftungsleitung und das Schaltventil im Abschnitt der Druckleitung sind über elektrische Steuerleitungen mit derselben Endstufe eines Steuergeräts verbunden.

DE 101 21 582 C2 offenbart ein Luftversorgungsaggregat für eine Luftfederungsanlage, bei welcher ein Entlüftungsventil in einer Entlüftungsleitung, ein Luftfederventil in der Galerie der Luftfederungsanlage und ein Luftsteuerventil vorgesehen ist. Alle drei Ventile sind mit einer elektronischen Steuereinheit verbunden. In einem als pneumatische Parallelschaltung ausgebildeter Abschnitt einer Druckleitung zwischen Trockner und Federventil ist das Luftsteuerventil parallel zu einem Rückschlagventil geschaltet, so dass Luft zwar ungehindert in die Luftfederanlage aufgenommen werden kann, jedoch nur gesteuert über das Luftsteuerventil wieder abgelassen werden kann. Zum Ablassen von Druckluft aus der Luftfederungsanlage werden alle drei vorgenannten Ventile geöffnet.

US 6,098,967 offenbart eine Druckluftversorgungsanlage der eingangs genannten Art, bei der in der Pneumatikhauptleitung zwischen Lufttrockner und Luftfederanlage ein als pneumatische Parallelschaltung ausgebildeter Abschnitt mit zwei parallel geschalteten Zweigleitungen angeordnet ist, wobei in einer ersten Zweigleitung ein zur Beströmung durchströmbares Rückschlagventil und in einer zweiten Zweigleitung ein zur Entlüftung durchströmbares Rückschlagventil mit einer Drossel und einem Schaltventil in Reihe geschaltet ist.

EP 1 216 860 B1 offenbart eine Niveauregelanlage für ein Kraftfahrzeug mit Luftfedern und mit einem Steuergerät, das die Funktionen Befüllen und Leeren in Abhängigkeit von dem Niveau des Fahrzeugaufbaus steuert oder regelt. Unter anderem sind ein steuerbares Wegeventil einer Druckluftversorgungsanlage und ein steuerbares einem Speicher vorgeordnetes Wegeventil mit dem Steuergerät verbunden. Das steuerbare und im geöffneten Zustand nur feststehend gedrosselte Wegeventil der Druckluftversorgungsanlage ist in einer Parallelschaltung zu einem Rückschlagventil angeordnet.

Problematisch bei allen vorgenannten Druckluftversorgungsanlagen ist die noch verbesserungswürdige und vergleichsweise komplexe bzw. bauteilintensive Anbindung einer Luftfederanlage an die Druckluftversorgungsanlage. Aufgrund des regelmäßig als Parallelschaltung ausgebildeten vorgenannten Abschnitts in einer Pneumatikhauptleitung ist diese wenigstens in einer Bypass-Leitung offen, bzw. gegen Gegendruck z. B. eines Rückschlagventils zu öffnen.

EP 1 243 447 A2 offenbart in Fig. 9 eine geschlossene Niveauregelanlage mit einer Galerieleitung, an die eine Anzahl von jeweils als Druckkammer für eine Luftfeder dienende Bälge und eine steuerbare, aus einer Reihenanordnung eines ersten 2/2-Wegeventils und eines zweiten 2/2-Wegeventils gebildete Trennventilanordnung einer Pneumatikanlage angeschlossen ist. Das zweite Wegeventil ist in der Druckluftleitung zwischen dem ersten steuerbaren Wegeventil und den Luftfedern angeordnet. Die Galerieleitung ist am zweiten Wegeventil angeschlossen. Die Pneumatikanlage ist aus der am ersten Wegeventil angeschlossenen Druckluftversorgungsanlage über die Trennventilanordnung befüllbar und entlüftbar. Ein Druckluftspeicher ist über ein separates Wegeventil und eine separate Pneumatikleitung an die Druckluftversorgungsanlage angeschlossen.

EP 1 380 453 B1 offenbart eine ähnlich geschlossene Niveauregelanlage für Fahrzeuge, durch die ein Fahrzeugaufbau gegenüber mindestens einer Fahrzeugachse abgefedert ist. Die Pneumatikanlage ist aus der an einem einzigen 2/2-Wegeventil angeschlossenen Druckluftversorgungsanlage befüllbar und entlüftbar. Bei dieser ist ebenfalls ein Druckluftspeicher über ein separates Wegeventil und eine separate Pneumatikleitung an die Druckluftversorgungsanlage angeschlossen. Der Druckluftspeicher ist separat von einer Luftfederanlage durch ein 4/4-Wegeventil oder zwei 2/2-Wegeventile von der Druckluftversorgungsanlage getrennt.

Auch diese pneumatischen Systeme mit einer vergleichsweise aufwändigen Anbindung der Pneumatikanlage an die notwendiger Weise geschlossene Druckluftversorgungsanlage sind noch verbesserbar.

An dieser Stelle setzt die Erfindung an, deren Aufgabe es ist, eine Pneumatikanlage und eine Druckluftversorgungsanlage zum Betreiben einer Pneumatikanlage anzugeben, die hinsichtlich des Standes der Technik verbessert sind, insbesondere eine verlässliche und dennoch flexible, gegebenenfalls schnelle Funktionsweise aufweist. Insbesondere soll eine Pneumatikanlage und eine Druckluftversorgungsanlage vergleichsweise einfach aufgebaut sein und dennoch ein vergleichsweise schnelles Entlüften bei möglichst vorteilhafter Trocknerregeneration ermöglichen. Insbesondere soll auch eine Akustik der Pneumatikanlage und der Druckluftversorgungsanlage verbessert sein. Aufgabe der Erfindung ist es ebenso, ein vorteilhaft gestaltetes pneumatisches System mit der Pneumatikanlage und der Druckluftversorgungsanlage anzugeben.

Betreffend die Pneumatikanlage wird die Aufgabe durch die Erfindung mit einer Luftfederanlage der eingangs genannten Art gelöst, bei der erfindungsgemäß die Merkmale des kennzeichnenden Teils des Anspruchs 1 oder des Anspruchs 2 vorgesehen sind.

Betreffend die Druckluftversorgungsanlage wird die Aufgabe durch die Erfindung mit einer Druckluftversorgungsanlage der eingangs genannten Art gelöst, bei der erfindungsgemäß die Merkmale des kennzeichnenden Teils des Anspruchs 14 vorgesehen sind.

Die Erfindung führt auf ein pneumatisches System des Anspruchs 15 mit einer erfindungsgemäßen Pneumatikanlage und Druckluftversorgungsanlage.

Die Erfindung führt auch auf ein Fahrzeugsystem und/oder Fahrzeug mit einem Pneumatiksystem und einer Steuerung, die mit der Trennventilanordnung und/oder dem Entlüftungsventil steuerverbunden ist. Insbesondere kann eine für die Trennventilanordnung und/oder das Entlüftungsventil gemeinsame oder jeweils separate Steuerleitung vorgesehen sein.

Eine Druckluftversorgungsanlage wird in einem pneumatischen System mit einer Pneumatikanlage in einer zuvor beschriebenen Luftfederanlage mit Druckluft betrieben, beispielsweise im Rahmen eines Druckniveaus von 5 bis 20 bar. Die Druckluft wird der Druckluftversorgungsanlage aus einer Druckluftzuführung zur Verfügung gestellt. Die Druckluft kann für die Druckluftzuführung insbesondere durch ein zwischen einer Luftzuführung und einem Druckluftzuführungsanschluss angeordneten Luftverdichter erzeugt werden. Die Druckluftzuführung ist zur Versorgung der Pneumatikanlage über eine erste pneumatische Verbindung mit einem Druckluftanschluss zur Pneumatikanlage verbunden. Die pneumatische Verbindung der eingangs genannten Druckluftversorgungsanlage weist vorteilhaft eine Pneumatikhauptleitung auf. Darüber hinaus weist die Druckluftversorgungsanlage der eingangs genannten Art eine mit der Pneumatikhauptleitung und einem Entlüftungsanschluss zur Umgebung pneumatisch verbundene zweite pneumatische Verbindung, vorteilhaft eine Entlüftungsleitung, mit einem steuerbaren Entlüftungsventil auf. Dadurch ist die Druckluftzuführung u. a. über das steuerbare Entlüftungsventil mit einem Entlüftungsanschluss zur Umgebung pneumatisch verbunden. Mittels des steuerbaren Entlüftungsventils kann durch Ablassen von Luft die Druckluftversorgungsanlage, insbesondere auch zur Entlüftung der Pneumatikanlage, zum Entlüftungsanschluss hin entlüftet werden. Es handelt sich vorliegend vorteilhaft um eine sogenannte offene Druckluftversorgungsanlage, da direkt in die Umgebung entlüftet wird bzw. Druckluft direkt aus der Umgebung durch den Druckluftzuführungsanschluss aufgenommen wird. Bei der ersten und zweiten pneumatischen Verbindung handelt es sich vorzugsweise um separate an einem gemeinsamen Druckluftzuführungsanschluss angeschlossene Verbindungen; die erste und zweite pneumatische Verbindung, vorzugsweise in Form der Pneumatikhauptleitung und der Entlüftungsleitung, kann jedoch auch ganz oder teilweise in einer Leitung zusammenfallen, die sowohl zur Entlüftung als auch zur Befüllung der Pneumatikanlage genutzt werden kann.

Die Erfindung geht von der Überlegung aus, dass eine vorteilhafte Gestaltung der pneumatischen Verbindung zwischen der Druckluftzuführung und einem Druckluftanschluss der Luftfederanlage grundsätzlich eine Basis für eine verbesserte Trocknerregeneration, insbesondere auch eine flexible und gegebenenfalls schnelle Entlüftung der Druckluftversorgungsanlage und/oder der Pneumatikanlage bzw. Belüftung derselben darstellen kann. Die Erfindung geht in einer Weiterbildung von der Überlegung aus, dass ein Druckluftanschluss der Luftfederanlage und/oder eine Pneumatikhauptleitung der Druckluftversorgungsanlage zur Darstellung der pneumatischen Verbindung dazu vergleichsweise einfach ausgelegt werden können. Die Erfindung hat erkannt, dass es erforderlich ist, die pneumatische Verbindung bidirektional und vollständig schließbar auszugestalten. Dazu sieht die Erfindung vor, dass eine steuerbare, aus wenigstens einem Wegeventil gebildete Trennventilanordnung, in der pneumatischen Verbindung zwischen Druckluftversorgungsanlage und Pneumatikanlage vorzusehen ist.

Die Pneumatikanlage ist aus der Druckluftversorgungsanlage über die Trennventilanordnung befüllbar und entlüftbar. Die Druckluftversorgungsanlage ist vorteilhaft offen gestaltet und vor allem einfacher gestaltet und hat nicht die Nachteile einer geschlossenen Druckluftversorgungsanlage; lässt sich insbesondere bei einem niedrigeren Druckniveau und so mit geringerem Energieaufwand betreiben.

Ein Trennventil und/oder Entlüftungsventil sind vorteilhaft Wegeventile. Ein steuerbares Trennventil der Trennventilanordnung ist - in einem Trennbetrieb - in einen geschlossenen Zustand schaltbar, wobei im geschlossenen Zustand die pneumatische Verbindung bidirektional und vollständig getrennt, d.h. geschlossen ist. Mit anderen Worten ist eine pneumatische Verbindung zwischen Druckluftzuführung und der Pneumatikanlage pneumatisch dicht verschließbar bzw. pneumatisch dicht verschlossen, wenn das steuerbare Trennventil in dem geschlossenen Zustand ist. Dies führt zu einer vorteilhaften Entkopplung von Druckluftversorgungsanlage und Pneumatikanlage. Die pneumatische Verbindung ist vorteilhaft mittels der Pneumatikhauptleitung der Druckluftversorgungsanlage und der Pneumatikleitung der Pneumatikanlage sowie einem diese anschließenden Druckluftanschluss gebildet. Die Trennventilanordnung kann in einer ersten Variante in der Pneumatikhauptleitung der Druckluftversorgungsanlage angeordnet sein. Die Trennventilanordnung kann in einer zweiten Variante in der Pneumatikleitung der Pneumatikanlage angeordnet sein. Grundsätzlich kann die Trennventilanordnung an einer beliebigen Stelle der pneumatischen Verbindung angeordnet sein, ohne dass eine Zugehörigkeit zur Druckluftversorgungsanlage oder Pneumatikanlage festgelegt ist. Vorteilhaft ist die Pneumatikhauptleitung bzw. Pneumatikleitung die einzige Leitung der pneumatischen Verbindung. Vorzugsweise ist die Trennventilanordnung die einzige Ventilanordnung in der pneumatischen Verbindung. Vorzugsweise ist die Trennventilanordnung mit einem Drosselmittel in einer Reihenanordnung in einer solchen Pneumatikhauptleitung bzw. Pneumatikleitung als einzige pneumatischen Verbindung angeordnet.

Bei einer bidirektional und vollständig trennbaren pneumatischen Verbindung ist es mit Vorteil versehen möglich, für die Pneumatikanlage, insbesondere eine Luftfederanlage, verschiedenste Betriebszustände zu realisieren, ohne dass dadurch die Druckluftversorgungsanlage beeinflusst wird - insbesondere ist dadurch eine gegebenenfalls ineffektive Beeinflussung des Lufttrockners vermieden. Vorteilhaft ist dazu die Pneumatikhauptleitung bzw. die Pneumatikleitung als eine einzige Leitung zur Darstellung der pneumatischen Verbindung zwischen der Druckluftzuführung und dem Druckluftanschluss vorgesehen. So kann bei pneumatisch vollständig und bidirektional verschlossener pneumatischer Verbindung in einer am Druckluftanschluss angeschlossenen Luftfederanlage vorteilhaft eine Druckmessung im Speicher oder den Bälgen stattfinden. Es kann auch ein Querschalten von Speicher und/oder Bälgen über die Galerie der Luftfederanlage erfolgen ohne dass die Druckluftversorgungsanlage, insbesondere ein Lufttrockner, beeinträchtigt würde.

Umgekehrt bietet das vorliegende Konzept einer Erfindung die Möglichkeit die steuerbare Trennventilanordnung - in einem Durchströmungsbetrieb - in einem offenen Zustand derart einzustellen, dass die Reihenanordnung aus steuerbaren Trennventil im offenen Zustand und dem Drosselmittel eine für das Füllen der Pneumatikanlage und das Entlüften der Pneumatikanlage optimierte Reihenanordnung darstellt. Mittels der Reihenanordnung kann auch eine Trocknerregeneration bzw. die Erfordernisse einer flexibel und gegebenenfalls schnell betätigbaren Druckluftversorgungsanlage und Pneumatikanlage erfüllt sein.

Aufgrund einer vorteilhaften Reihenanordnung von Drosselmittel und Trennventilanordnung ist darüber hinaus die pneumatische Verbindung, insbesondere ein Druckluftanschluss und/oder die Pneumatikhauptleitung und/oder die Pneumatikleitung, vergleichsweise einfach und flexibel und dennoch verlässlich ausgestaltet.

Erfindungsgemäß ist bei einer steuerbaren, aus wenigstens einem Wegeventil gebildeten Trennventilanordnung der Pneumatikanlage oder Druckluftversorgungsanlage vorgesehen, dass die Trennventilanordnung einen ersten, zweiten und dritten Anschluss aufweist, wobei an dem ersten Anschluss der Druckluftspeicher, an dem zweiten Anschluss der Druckluftanschluss und an dem dritten Anschluss die Galerie der Luftfederanlage pneumatisch angeschlossen ist. Eine Druckkammer einer Luftfeder ist vorteilhaft in Form eines Balgs gebildet.

Gemäß dem Konzept der Erfindung kann eine derartige aus wenigstens einem Wegeventil gebildete steuerbare Trennventilanordnung mit drei Anschlüssen - wie beansprucht - mit Vorteil versehen in einer Druckluftversorgungsanlage oder einer Pneumatikanlage oder, an beliebiger Stelle, in einem pneumatischen System angeordnet sein. Dabei ist an den zweiten Anschluss der Druckluftanschluss - auf der Seite der Druckluftversorgungsanlage- pneumatisch angeschlossen. Der erste Anschluss ist zum Anschließen eines Druckluftspeichers der Luftfederanlage und der dritte Anschluss zum Anschließen einer Galerie der Luftfederanlage eingerichtet. Die Trennventilanordnung bedient und schaltet also alle Anschlüsse, nämlich für Speicher, Galerie und Druckluftversorgungsanlage, an einer Stelle des pneumatischen Systems. Dies stellt eine erhebliche konstruktive Vereinfachung der eingangs genannten aus EP1 216 860B1 oder EP 1 243 447A1 oder EP1 380 453A1 bekannten System dar.

Das Konzept der Erfindung führt dementsprechend auf ein pneumatisches System der eingangs genannten Art, bei dem erfindungsgemäß eine steuerbare aus wenigstens einem Wegeventil gebildete Trennventilanordnung mit wenigstens drei Anschlüssen vorgesehen ist. Erfindungsgemäß ist dabei an den ersten Anschluss der Druckluftspeicher der Luftfederanlage und an den dritten Anschluss die Galerie der Luftfederanlage angeschlossen. Erfindungsgemäß ist weiter an den zweiten Anschluss der Druckluftanschluss, d.h. die pneumatische Verbindung zwischen Druckluftversorgungsanlage und Luftfederanlage pneumatisch angeschlossen. In einem geschlossenen Zustand des zweiten Anschlusses ist erfindungsgemäß die pneumatische Verbindung bidirektional und vollständig geschlossen.

Erfindungsgemäß ist vorgesehen, dass die Trennventilanordnung zur Einnahme von wenigstens drei Schaltstellungen ausgebildet ist, wobei in wenigstens einer der Schaltstellungen der zweite Anschluss der Trennventilanordnung in einem geschlossenen Zustand schaltbar ist, in dem die Pneumatikleitung zum Lufttrockner bidirektional und vollständig geschlossen ist.

Unter einem bidirektionalen vollständigen Verschließen ist zu verstehen, dass in einem geschlossenen Zustand des zweiten Anschlusses eine pneumatische Verbindung zwischen Druckluftversorgungsanlage und Pneumatikanlage pneumatisch dicht verschlossen ist. Es ist auch zu verstehen, dass die pneumatische Verbindung in Befüllrichtung, d. h. also in einer Richtung von der Druckluftversorgungsanlage zur Pneumatikanlage verschlossen ist; dies selbst bei höheren Drücken, die im Stand der Technik ein Rückschlagventil in Durchlassrichtung öffnen würden. Gleichzeitig ist die pneumatische Verbindung auch in einer Entlüftungsrichtung, d.h. in einer Richtung von der Pneumatikanlage zur Druckluftversorgungsanlage, pneumatisch dicht verschlossen. Ein derartiger Effekt ist vorteilhaft durch eine oben genannte Ausbildung der pneumatischen Verbindung mit einer einzigen Pneumatikhauptleitung und/oder Pneumatikleitung zwischen Galerie und Trockner realisiert. Insbesondere ist in der pneumatischen Verbindung vorteilhaft ein Drosselmittel und die Trennventilanordnung in einer Reihenanordnung angeordnet. Aus dem vorbekannten Stand der Technik sind praktisch nur Parallelanordnungen eines Trennventils - beispielsweise zu einem Rückschlagventil oder zu einem Drosselmittel - bekannt, so dass eine pneumatische Verbindung zwischen Druckluftversorgungsanlage und Pneumatikanlage wenigstens in einer Richtung, zumeist in einer Befüllrichtung von der Druckluftversorgungsanlage zur Pneumatikanlage, bei Überwindung eines Schaltdrucks, z. B. eines Rückschlagventils pneumatisch offen ist. Vorteilhaft sind eine Druckluftzuführung und/oder ein Entlüftungsanschluss zur Umgebung zu öffnen.

Mit anderen Worten schlägt das Konzept der Erfindung eine bidirektional und pneumatisch vollständig schließbare pneumatischen Verbindung zwischen der Druckluftversorgungsanlage und der Pneumatikanlage in Kombination mit einer mit drei Anschlüssen versehenen Trennventilanordnung vor. Dies führt zu einer einerseits besonders flexiblen Schaltmöglichkeit der Trennventilanordnung und zum anderen zu einer besonders leicht realisierbaren, bauraumsparenden und bauteilesparenden Lösung zur Entkopplung von Pneumatikanlage und Druckluftversorgungsanlage. Beispielsweise werden überflüssige Rückschlagventile oder vergleichsweise komplexe Parallelschaltungen weitgehend vermieden. Die Erfindung hat mit dem Konzept einer drei-anschlüssigen, steuerbaren, aus wenigstens einem Wegeventil gebildeten Trennventilanordnung erkannt, dass sich darüber wenigstens drei Druckluftabnehmer und/oder -zuführer mit besonderem Vorteil versehen in einer einzigen Trennventilanordnung schalten lassen. Dies betrifft einen Betrieb der Trennventilanordnung sowohl im Durchströmungsbetrieb als auch im Trennbetrieb.

Im Rahmen der ersten Variante der Erfindung ist die Trennventilanordnung mit wenigstens drei Anschlüssen mittels eines ersten und eines zweiten Wegeventils gebildet. Das erste und zweite Wegeventil der Trennventilanordnung ist vorteilhaft in Form eines 2/2-Wegeventils gebildet. Vorteilhaft lässt sich das erste Wegeventil -im Folgenden auch Primärventil genannt- als 2/2-Wegeventil mit der Funktion eines Niveauregelventils für den Druckluftspeicher, also in einer Speicherzweigleitung ausführen. Vorteilhaft weist eine Speicherzweigleitung ein erstes Wegeventil als ein Primärventil und die pneumatische Verbindung, insbesondere der Druckluftanschluss, ein zweites Wegeventil als ein Sekundärventil auf. Beide Wegeventile sind vorteilhaft als 2/2-Wegeventile ausgeführt. Im letzteren Fall hat es sich als besonders vorteilhaft erwiesen, dass das erste und zweite Wegeventil in Form eines Doppelanker-Magnetventils gebildet ist. Dieses lässt sich vergleichsweise einfach und kompakt konstruktiv realisieren. Insgesamt lässt sich bei der vorgenannten weiterbildenden ersten Variante der erste, zweite und dritte Anschluss vergleichsweise einfach realisieren; nämlich als ein erster Anschluss am ersten Wegeventil, insbesondere Primärventil, als zweiter Anschluss am zweiten Wegeventil, insbesondere Sekundärventil, und als dritter Anschluss zwischen dem ersten und zweiten Wegeventil. Mit Vorteil versehen kann die so realisierte Trennventilanordnung gemäß der weiterbildenden ersten Variante mit einfachen Komponenten, nämlich 2/2-Wegeventilen, aufgebaut werden und erweist sich als vergleichsweise preisgünstig.

Im Rahmen einer zweiten bzw. dritten Variante der Erfindung ist die Trennventilanordnung mit wenigstens drei Anschlüssen, d.h. mittels eines 3/4-Wegeventils bzw. eines 3/3-Wegeventils gebildet, das den ersten, zweiten und dritten Anschluss aufweist. Eine solche Anordnung hat sich als vergleichsweise kompakt und einfach zu steuern erwiesen. Insbesondere hat sich gezeigt, dass sich ein Niveauregelventil für einen Druckluftspeicher im Rahmen der Trennventilanordnung in Form eines 3/4-Wegeventils oder eines 3/3-Wegeventils realisieren lässt. Insbesondere kann dabei mit Vorteil versehen ein Niveauregelventil für den Druckluftspeicher, insbesondere in einer Speicherzweigleitung, entfallen. Letztlich ermöglicht die Ausführung der Trennventilanordnung als ein 3/4-Wegeventil oder ein 3/3-Wegeventil die Einsparung eines Niveauregelventils für den Druckluftspeicher. Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Darüber hinaus sieht eine Weiterbildung vor, dass sich die Trennventilanordnung besonders einfach im Rahmen einer Trennventileinheit realisieren lässt. Dies trifft insbesondere für die dem erfindungsgemäßen Ansatz folgende, konkrete Ausgestaltung der Trennventilanordnung in Form eines 3/4-Wegeventils oder eines 3/3-Wegeventils oder in Form einer Kombination mit zwei 2/2-Wegeventilen. Bei letzterer ist dazu der dritte Anschluss, für die Galerieleitung, zwischen dem ersten und zweiten 2/2-Wegeventil angeschlossen. Dies hat den Vorteil, dass für eine pneumatische Kopplung oder Entkopplung der Galerie von der Druckluftversorgungsanlage nur eines der Wegeventile betätigt werden muss; also ein Betätigungsaufwand reduziert ist.

Neben der Möglichkeit durch aktive Eingriffe eine Druckluftströmung zwischen Pneumatikanlage und Druckluftversorgungsanlage zu regeln und/oder zu steuern ermöglicht das Konzept der Erfindung oder Weiterbildungen desselben eine erhebliche Energieeinsparung und verbesserte Regelgüte für die Druckluftversorgungsanlage und/oder Pneumatikanlage. Insbesondere hat sich gezeigt, dass sich ein Wirkungsgrad einer Regeneration des Lufttrockners erheblich verbessert, da dieser nicht bei jeder Betriebsfunktion der Pneumatikanlage mit einem Regenerationsbetrieb belegt wird, der womöglich unvollständig oder ineffektiv sein kann. Daraus ergibt sich eine effektive Betriebsweise und insgesamt geringere Belastung des Lufttrockners und damit eine verlängerte Lebensdauer des Lufttrockners bzw. eine verlängerte Lebensdauer des Trockengranulats im Lufttrockner. Diese und andere Vorteile ergeben sich insbesondere für den Fall eines Umspeicherns von Druckluft in der Pneumatikanlage und im Falle von Messungen in der Pneumatikanlage und im Falle von Hebe- oder Senkvorgängen, die ohne eine Druckluftzuführung der Druckluftversorgungsanlage ausgeführt werden können.

Im Rahmen einer besonders bevorzugten Weiterbildung ist der dritte Anschluss als stromlos offener Anschluss gestaltet. Dies führt dazu, dass in einem stromlosen Zustand der steuerbaren, aus wenigstens einem Wegeventil gebildeten Trennventilanordnung eine pneumatische Verbindung zwischen einer Druckluftzuführung der Druckluftversorgungsanlage und einer Galerie der Luftfederanlage pneumatisch offen ist.

Als besonders vorteilhaft hat sich die Realisierung einer Trennventilanordnung und/oder einer Entlüftungsventilanordnung mit einer einzigen Ventilanordnung, beispielsweise als ein Mehranker- oder Doppelanker-Magnetventil, als vorteilhaft erwiesen. Insbesondere kann eine Trennventilanordnung im Rahmen einer Mehranker- oder Doppelanker-Magnetventilanordnung realisiert sein. Insbesondere kann eine Entlüftungsventilanordnung im Rahmen einer Mehranker-Magnetventil- oder Doppelanker-Magnetventilanordnung realisiert sein. Ganz allgemein kann ein Primärventil und ein Sekundärventil gemäß dieser Weiterbildung als ein Ventil in einem gemeinsamen Gehäuse ausgebildet sein, das einen ein erstes Dichtelement des Primärventils tragenden Primäranker und ein zweites Dichtelement des Sekundärventils tragenden Sekundäranker aufweist, die in einem gemeinsamen Spulenkörper angeordnet sind. Der Spulenkörper und die Anker bilden zusammen eine Spule im Rahmen des Magnetteils der Magnetventilanordnung. Vorteilhaft lässt sich bei einem Doppelanker-Magnetventil, z. B. mit steigendem Steuerstrom, der Primäranker und der Sekundäranker zeitlich sequentiell nacheinander anziehen. Zusätzlich kann jeweils eine Ventilfeder bei Primärventil bzw. Sekundärventil mit einer anderen unterschiedlichen Federkraft realisiert sein, so dass die Ventile zeitlich nacheinander, d.h. zunächst das Primär- dann das Sekundärventil, anziehen. Mittels eines einstellbaren Steuerstroms, für den eine Ankeranzugskraft alle vorgenannten Federkräfte übersteigt, lassen sich Primärventil und Sekundärventil auch gleichzeitig aktivieren.

Bei einem Fahrzeugsystem kann die Steuerung vorteilhaft ausgelegt sein, um einen Steuerzustand der Trennventilanordnung und/oder einer Entlüftungsventilanordnung aufeinander abzustimmen. Beispielsweise kann bei einer vorgenannten vorteilhaften Weiterbildung der zweite und/oder dritte Anschluss der Trennventilanordnung stromlos offen geschaltet sein. Für diesen Zustand hat es sich als vorteilhaft erwiesen, dass ein Entlüftungsventil der Entlüftungsventilanordnung stromlos geschlossen ist. Darüber hinaus kann es sich als vorteilhaft erweisen, dass die vorgenannten Anschlüsse der Trennventilanordnung einerseits und eine Entlüftungsventilanordnung in einer stromlosen Stellung komplementär geschaltet sind. Eine Trennventilanordnung und eine Entlüftungsventilanordnung können mit jeweils separaten Steuerleitungen und mit entsprechend darauf übermittelbaren separaten Steuersignalen angesteuert werden. Ein Steuersignal ist vorzugsweise in Form eines PWM-Steuersignals realisiert. Ein Entlüftungsventil der Entlüftungsventilanordnung und/oder ein Trennventil der Trennventilanordnung ist vorteilhaft in Form eines Magnetventils realisiert. Gleichwohl kann eine für beide gemeinsam geeignete Steuerung oder ein entsprechendes Steuermodul vorgesehen sein.

Besonders bevorzugt ist vorgesehen, dass wenigstens für die steuerbare Trennventilanordnung - gegebenenfalls auch für das steuerbare Entlüftungsventil - im Durchströmungsbetrieb eine Durchflussmenge regelbar und/oder steuerbar ist. Die Erfindung hat im Rahmen der vorgenannten Weiterbildung erkannt, dass die steuerbare Trennventilanordnung derart angesteuert werden kann, dass sich für die Reihenanordnung mit dem Drosselmittel eine für Entlüftung, Belüftung und gleichermaßen für Trocknerregeneration und Akustik der Druckluftversorgungsanlage vorteilhafte Einstellung durch die Steuerung erreichen lässt. So kann ein Entlüftungsknall für eine Druckluftversorgungsanlage immer dann zu befürchten sein, wenn ein zu großes Druckluftvolumen bei zu hohem Druck in einem zu kurzen Zeitraum entlüftet würde. Insbesondere lässt sich auch bei vergleichsweise schnellen Entlüftungsvorgängen das steuerbare Trennventil im Durchströmungsbetrieb hinsichtlich einer Durchflussmenge einer Druckluftströmung regeln und/oder steuern um einen bevorzugten Entlüftungsverlauf zu erreichen.

Besonders bevorzugt ist wenigstens ein Trennventil der steuerbaren Trennventilanordnung für einen Durchströmungsbetrieb in einen offenen Zustand schaltbar. Vorteilhaft ist für einen Trennbetrieb wenigstens ein Trennventil der steuerbaren Trennventilanordnung in einen geschlossenen Zustand schaltbar. Das Konzept der Erfindung sieht vor, dass im geschlossenen Zustand die pneumatische Verbindung bidirektional und vollständig getrennt ist. Das Konzept ermöglicht so eine für verschiedenste Betriebsarten der Pneumatikanlage vorteilhafte - pneumatisch dichte - Entkopplung der Druckluftversorgungsanlage und der Pneumatikanlage.

Im Rahmen einer besonders bevorzugten Weiterbildung ist wenigstens ein Trennventil der steuerbaren Trennventilanordnung zwischen einem ersten Steuerzustand und einem zweiten Steuerzustand umschaltbar. Dabei ist der erste Steuerzustand einem geschlossenen Zustand eines steuerbaren Trennventils zugeordnet und der zweite Steuerzustand ist einem geöffneten Zustand eines steuerbaren Trennventils zugeordnet. Der erste und/oder zweite Steuerzustand lässt sich vorteilhaft wenigstens dem steuerbaren Trennventil über eine elektronische Steuerung vorgeben, beispielsweise mittels einem geeigneten über eine Steuerleitung geführten Steuersignal an das steuerbare Trennventil. Der erste Steuerzustand kann derart gestaltet sein, dass das Trennventil vollständig in den geschlossenen Zustand übergeht. Der erste Steuerzustand kann auch so gestaltet sein, dass das Trennventil mit Beginn des Schaltvorgangs beginnt in den geschlossenen Zustand überführt zu werden, ohne dass der geschlossene Zustand erreicht wird. Analog kann der zweite Steuerzustand das steuerbare Trennventil in den vollständig geöffneten Zustand überführen. Der zweite Steuerzustand kann auch so gestaltet sein, dass das steuerbare Trennventil mit Beginn des Schaltvorgangs teilweise öffnet und sich im weiteren Verlauf auf den vollständig geöffneten Zustand hin bewegt, ohne dass der vollständig geöffnete Zustand erreicht wird. Beispielsweise können der erste und zweite Steuerzustand derart gestaltet sein, dass sich das steuerbare Trennventil dynamisch zwischen einem vollständig geschlossenen und einem vollständig geöffneten Zustand hin und her bewegt, ohne dass das steuerbare Trennventil vollständig geschlossen oder vollständig geöffnet wäre. Insbesondere kann dazu eine Steuerzustandsänderung mit einer zweckmäßig gewählten Taktrate erfolgen.

Vorteilhaft ist insbesondere vorgesehen, dass die Trennventilanordnung in einem Durchströmungsbetrieb zum zweiten Anschluss zwischen einem ersten, einem geschlossenen Zustand zugeordneten Steuerzustand, und einem zweiten, einem geöffneten Zustand zugeordneten Steuerzustand, umschaltbar ist, und in dem einem zweiten, einem geöffneten Zustand zugeordneten Steuerzustand mit einer Taktrate einer Steuerzustandsänderung hin und her umschaltbar, ist.

Es hat sich gezeigt, dass eine Gestaltung und Abstimmung von ersten und zweiten Steuerzuständen vorteilhaft zur Realisierung einer effektiven Nennweite einer Reihenanordnung aus Trennventilanordnung und Drosselmittel in der pneumatischen Verbindung ist. Genauer gesagt, bilden die Trennventilanordnung und ein Drosselmittel eine Reihenanordnung in der pneumatischen Verbindung zum Lufttrockner, derart, dass wenigstens ein steuerbares Wegeventil der Trennventilanordnung in einem Durchströmungsbetrieb in einen offenen Zustand und in einem Trennbetrieb in einen geschlossenen Zustand schaltbar ist, wobei im geschlossenen Zustand die erste pneumatische Verbindung bidirektional und vollständig geschlossen ist.

Unter einem Drosselmittel ist grundsätzlich jedes einen Leitungsquerschnitt der Pneumatikhauptleitung verengendes Mittel zu verstehen. Eine bevorzugte Nennweite der Pneumatikhauptleitung liegt oberhalb von 4 mm. Das Drosselmittel hat bevorzugt eine durch den kleinsten lichten Drosselquerschnitt festgelegte tatsächliche Nennweite oberhalb von 0,6 mm. Je nach Leitungsquerschnitt der Pneumatikhauptleitung kann ein Drosselquerschnitt bis zu 8 mm betragen. Bevorzugt liegt eine tatsächliche Nennweite des Drosselmittels zwischen 1 und 3 mm, insbesondere bei 2,5 mm. Gemäß der oben erläuterten besonders bevorzugten Weiterbildung der Erfindung liegt eine effektive Nennweite der Reihenanordnung aus Drosselmittel und steuerbarem Trennventil unterhalb der so vorgegebenen tatsächlichen Nennweite des Drosselmittels.

Besonders bevorzugt ist das Drosselmittel als eine vom Trennventil separate Drossel gebildet. Dies kann, wie erläutert, grundsätzlich jede Art einer Veränderung des Leitungsquerschnitts der Pneumatikhauptleitung sein oder eine speziell ausgebildete Drosseleinrichtung. Ein Drosselmittel kann auch im Trennventil und/oder in einem weiteren Ventil gebildet sein, beispielsweise durch eine Öffnung eines Ventilsitzes des Trennventils und/oder dem weiteren Ventil oder einer anderen Querschnittseinengung an einer Stelle einer pneumatischen Verbindung.

Im Rahmen einer ersten besonders bevorzugten Variante ist das Entlüftungsventil als direkt geschaltetes Ventil Teil einer Magnetventilanordnung zur direkten Schaltung eines Druckluftvolumens, wobei die Magnetventilanordnung frei von einem Steuerventil ist. Mit anderen Worten dient die Magnetventilanordnung gemäß dieser Variante zur Realisierung einer direkt gesteuerten Entlüftungsmagnetventilanordnung. Es hat sich gezeigt, dass durch direkte Schaltung eines Druckluftvolumens die Schaltzeit der direkt gesteuerten Entlüftungsmagnetventilanordnung unterhalb einer indirekt gesteuerten Entlüftungsmagnetventilanordnung liegen kann; dies bei gleich großen Entlüftungsquerschnitten. Wie von dieser Variante erkannt, hat dies Vorteile bei der Entlüftung der Druckluftversorgungsanlage unter Regeneration des Lufttrockners.

In einer zweiten besonders bevorzugten weiterbildenden Variante ist das Entlüftungsventil als indirekt geschaltetes Relaisventil Teil einer Magnetventilanordnung zur indirekten Schaltung eines Druckluftvolumens. Die Magnetventilanordnung weist dann ein einem Druck der Pneumatikhauptleitung ausgesetztes Steuerventil zur Steuerung des Relaisventils auf. In einer ersten bevorzugten Abwandlung kann der Druck ein Gesamtdruck in der Pneumatikhauptleitung sein. In einer zweiten Abwandlung kann der Druck auch ein Teildruck der Pneumatikhauptleitung sein. Mit anderen Worten dient die Magnetventilanordnung gemäß dieser zweiten Variante zur Realisierung einer indirekt gesteuerten Entlüftungsmagnetventilanordnung. Es hat sich gezeigt, dass durch indirekte Schaltung eines Gesamtdruckluftvolumens ein Steuerdruck vergleichsweise gering gehalten werden kann. Wie von der ersten Abwandlung dieser zweiten Variante erkannt, lässt sich durch Nutzung eines Gesamtdrucks in der Pneumatikhauptleitung für das Steuerventil dennoch eine vergleichsweise schnelle Schalttätigkeit des Entlüftungsventils erzielen.

Im Rahmen einer besonders bevorzugten Weiterbildung der Pneumatikanlage ist wenigstens eine Luftfeder, insbesondere dessen Balg, über wenigstens eine Balg-Zweigleitung an der Galerie angeschlossen. Zusätzlich oder alternativ ist der Druckluftspeicher über eine Speicher-Zweigleitung an die Galerie angeschlossen. Unter einer Galerie ist besonders bevorzugt eine Galerieleitung oder dergleichen Sammelleitung und/oder Verteilerleitung zu verstehen, von der wenigstens eine Balg-Zweigleitung ggf. auch eine andere Zweigleitung wie z.B. zu einem Drucksensor oder einem Speicher abgehen; mit anderen Worten werden in einer Sammel- und/oder Verteilerleitung in der Art einer Galerie wenigstens eine Anzahl von Balg-Zweigleitungen zusammengeführt. Darüber hinaus soll eine Galerie einen Druckluftanschluss für eine pneumatische Verbindung der Luftfederanlage mit der Druckluftversorgungsanlage aufweisen. Unter einer Galerie ist demnach insbesondere eine Sammel- und/oder Verteilerleitung für die wenigstens eine Balg-Zweigleitung und den Druckluftanschluss zu verstehen.

Bevorzugt weist die Balg-Zweigleitung ein Niveauregelventil in Form eines Wegeventils auf. Ein Niveauregelventil in einer vorgenannten Zweigleitung hat den Vorteil, dass die Druckkammer einer Luftfeder pneumatisch von der Galerie getrennt werden können, wenn das Niveauregelventil in einem geschlossenen Zustand ist. In ähnlicher Funktion kann ein Speicherventil in einer Speicher-Zweigleitung einen Druckluftspeicher anschließen. Durch Öffnen einer oder mehrerer der Niveauregelventile bzw. eines Speicherventils kann - abgesehen von einer Niveauregelung - in Einzelfällen, ein Druckausgleich zwischen einer oder mehreren Druckkammern der Luftfedern bzw. dem Druckluftspeicher und den Druckkammern vorgenommen werden. Insbesondere kann ein Umspeichern von Druckluft zwischen den Druckkammern der Luftfedern und/oder einem Druckluftspeicher über die Galerie erfolgen. Dies wird auch als "Querschalten" der Luftfedern und/oder - wichtiger - des Druckluftspeichers bezeichnet. Dies kann Nachteile mit sich bringen für den Fall, dass ein Lufttrockner der Druckluftversorgungsanlage nicht gegen die Galerie abgesperrt ist. Durch die gemäß dem Konzept der Erfindung vorgesehene steuerbare, aus wenigstens einem Wegeventil gebildete Trennventilanordnung in der pneumatischen Verbindung der Luftfederanlage mit der Druckluftversorgungsanlage ist dieses Problem vorteilhaft behoben. Die Pneumatikanlage kann, beispielsweise beim Querschalten, aber auch in jedem anderen Betriebszustand unabhängig von der Druckluftversorgungsanlage betrieben werden, da die Trennventilanordnung die Möglichkeit bietet, die Pneumatikanlage und die Druckluftversorgungsanlage durch bidirektionales und vollständiges Schließen der pneumatischen Verbindung voneinander zu entkoppeln.

Es hat sich gezeigt, dass ein Niveauregelventil besonders vorteilhaft in Form eines 2/2-Wegeventils gebildet sein kann. Je nach Ausführung der steuerbaren, aus wenigstens einem Wegeventil gebildete Trennventilanordnung kann ein Niveauregelventil bzw. Speicherventil in Form eines 2/2-Wegeventils - sei es für eine Luftfeder oder für einen Druckluftspeicher - auch im Rahmen der steuerbaren Trennventilanordnung realisiert sein.

Eine bevorzugte Weiterbildung der Druckluftversorgungsanlage sieht vor, dass die Trennventilanordnung die einzige Ventilanordnung in der einzigen Pneumatikhauptleitung zwischen dem Lufttrockner und dem Druckluftanschluss, insbesondere zwischen dem Lufttrockner und der Galerieleitung ist.

Bevorzugt ist auch im Rahmen einer bevorzugten Weiterbildung der Druckluftversorgungsanlage und/oder des pneumatischen Systems vorgesehen, dass (a) die Trennventilanordnung mittels eines ersten und eines zweiten Wegeventils gebildet ist, wobei der dritte Anschluss zwischen dem ersten Wegeventil und dem zweiten Wegeventil pneumatisch angeschlossen ist, oder (b) die Trennventilanordnung mittels eines 3/4-Wegeventils, oder (c) die Trennventilanordnung mittels eines 3/3 Wegeventils gebildet ist.

Im Rahmen einer bevorzugten ersten Variante der Druckluftversorgungsanlage ist das Entlüftungsventil als direkt geschaltetes Ventil Teil einer Magnetventilanordnung zur direkten Schaltung eines Druckluftvolumens.
Im Rahmen einer bevorzugten zweiten Variante der Druckluftversorgungsanlage ist das Entlüftungsventil als indirekt geschaltetes Relaisventil Teil einer Magnetventilanordnung zur indirekten Schaltung eines Druckluftvolumens ist, wobei die Magnetventilanordnung ein einem Druck der Pneumatikhauptleitung ausgesetztes Steuerventil zur Steuerung des Relaisventils aufweist.

Bevorzugt ist auch im Rahmen einer bevorzugten Weiterbildung der Druckluftversorgungsanlage und/oder des pneumatischen Systems vorgesehen, dass der dritte und/oder zweite Anschluss in stromlosem Zustand der Trennventilanordnung in einer pneumatisch offenen Verbindung geschaltet sind.

Bevorzugt ist im Rahmen einer bevorzugten Weiterbildung des pneumatischen Systems vorgesehen, dass in einem ersten Betriebsmodus die pneumatische Verbindung zwischen Galerieleitung und Lufttrockner bidirektional und vollständig geschlossen ist, wobei in der Pneumatikanlage eine Druckmessung und/oder ein Querschalten eines Speichers und/oder eines Balgs durchführbar ist, ohne dass der Lufttrockner der Druckluftversorgungsanlage mit Druckluft beaufschlagt wird.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

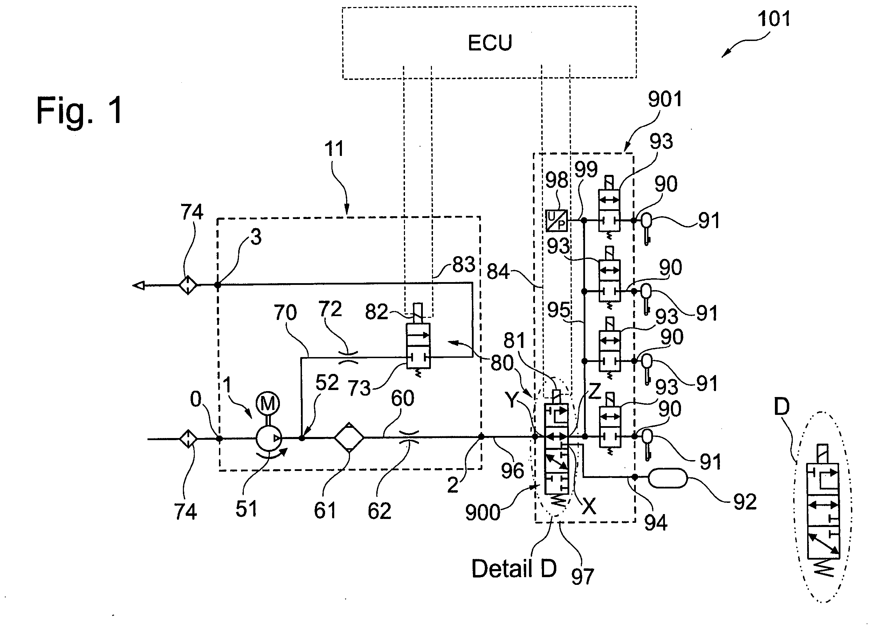

Fig. 1 ein Schaltbild eines pneumatischen Systems mit einer besonders bevorzugten Ausführungsform einer Druckluftversorgungsanlage, bei welcher ein einziges Entlüftungsventil ein direkt geschaltetes Magnetventil ein Druckluftvolumen direkt schaltet und wobei die Trennventilanordnung mit drei Anschlüssen X, Y, Z mittels eines 3/4-Wegeventils gemäß einer zweiten Variante der Erfindung gebildet ist und in dieser Ausführungsform in einem Ventilblock einer Pneumatikanlage integriert ist - in einer Ausführungsform des Details D gemäß einer dritten Variante der Erfindung kann die Trennventilanordnung mit drei Anschlüssen X, Y, Z mittels eines 3/3-Wegeventils gebildet sein;
Fig. 2 ein Schaltbild eines in Bezug auf das 3/4-Wegeventil der Fig. 1 abgewandelten pneumatischen Systems wobei in dieser Ausführungsform das 3/4-Wegeventil in der Druckluftversorgungsanlage integriert ist - in einer Ausführungsform des Details D gemäß einer dritten Variante der Erfindung kann die Trennventilanordnung mit drei Anschlüssen X, Y, Z mittels eines 3/3-Wegeventils gebildet sein;
Fig. 3A ein Schaltbild eines pneumatischen Systems mit einer besonders bevorzugten Ausführungsform einer Druckluftversorgungsanlage, bei welcher ein einziges Entlüftungsventil ein direkt geschaltetes Magnetventil ein Druckluftvolumen direkt schaltet und wobei die Trennventilanordnung mit drei Anschlüssen X, Y, Z mittels eines ersten 2/2-Wegeventils und eines zweiten 2/2-Wegeventils gemäß einer ersten Variante der Erfindung gebildet ist und in dieser Ausführungsform in einem Ventilblock einer Pneumatikanlage integriert ist;
Fig. 3B, Fig. 3C, Fig. 3D besonders bevorzugte abgewandelte Ausführungsformen der Trennventilanordnung der Fig. 3A jeweils in Form eines Doppelanker-Magnetventils, mit dem ersten 2/2-Wegeventil als Primärventil und dem zweiten 2/2-Wegeventil als Sekundärventil wobei drei unterschiedliche Schaltzustände des Doppelanker-Magnetventils gezeigt sind;
Fig. 4 ein Schaltbild eines in Bezug auf das mit zwei 2/2-Wegeventilen der Fig. 3A realisierte System abgewandelten pneumatischen Systems, wobei in dieser Ausführungsform eines der 2/2-Wegeventile in der Druckluftversorgungsanlage und das andere in einem Ventilblock integriert ist;

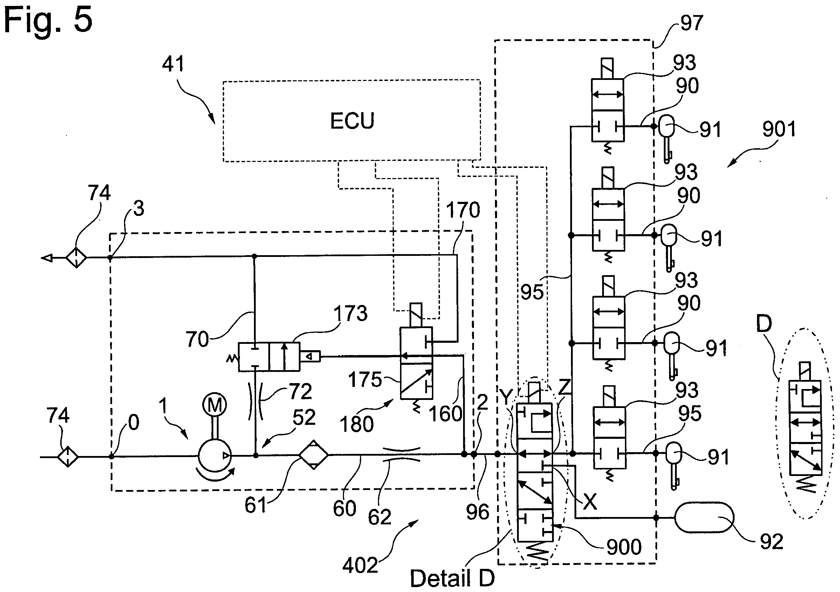

Fig. 5 ein Schaltbild eines pneumatischen Systems mit einer weiteren besonders bevorzugten Ausführungsform einer Druckluftversorgungsanlage, bei welcher das Entlüftungsventil als indirekt geschaltetes Relaisventil Teil einer Magnetventilanordnung zur indirekten Schaltung eines Druckluftvolumens ist und wobei die Magnetventilanordnung ein einem Gesamtdruck der Pneumatikhauptleitung ausgesetztes Steuerventil zur Steuerung des Relaisventils aufweist und wobei die Trennventilanordnung mit drei Anschlüssen X, Y, Z mittels eines 3/4-Wegeventils gemäß einer zweiten Variante der Erfindung gebildet ist und in dieser Ausführungsform in einem Ventilblock einer Pneumatikanlage integriert ist- in einer Ausführungsform des Details D gemäß einer dritten Variante der Erfindung kann die Trennventilanordnung mit drei Anschlüssen X, Y, Z mittels eines 3/3-Wegeventils gebildet sein;

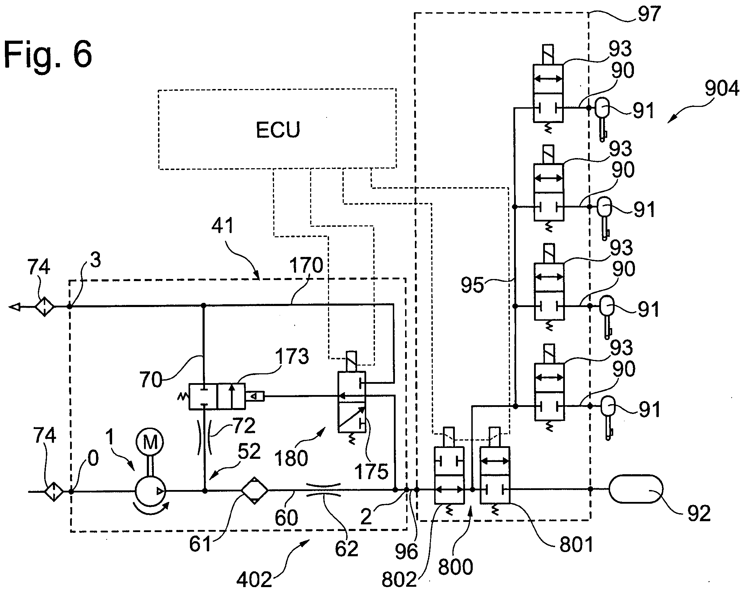

Fig. 6 ein Schaltbild eines pneumatischen Systems mit einer weiteren besonders bevorzugten Ausführungsform einer Druckluftversorgungsanlage, bei welcher das Entlüftungsventil als indirekt geschaltetes Relaisventil Teil einer Magnetventilanordnung zur indirekten Schaltung eines Druckluftvolumens ist, wobei die Magnetventilanordnung ein einem Gesamtdruck der Pneumatikhauptleitung ausgesetztes Steuerventil zur Steuerung des Relaisventils aufweist und wobei die Trennventilanordnung mit drei Anschlüssen X, Y, Z mittels eines ersten 2/2-Wegeventils und eines zweiten 2/2-Wegeventils gemäß einer ersten Variante der Erfindung gebildet ist und in dieser Ausführungsform in einem Ventilblock einer Pneumatikanlage integriert ist;
Fig. 7 unterschiedliche Betriebszustände A, B, C eines pneumatischen Systems der Fig. 5 zum Befüllen der Pneumatikanlage;
Fig. 8 unterschiedliche Betriebszustände A, B, C eines pneumatischen Systems der Fig. 6 zum Befüllen der Pneumatikanlage;
Fig. 9 unterschiedliche Betriebszustände A, B, C eines pneumatischen Systems der Fig. 5 zum Messen bzw. Querschalten in der Pneumatikanlage;
Fig. 10 unterschiedliche Betriebszustände A, B, C eines pneumatischen Systems der Fig. 6 zum Messen bzw. Querschalten in der Pneumatikanlage;
Fig. 11 unterschiedliche Betriebszustände A, B eines pneumatischen Systems der Fig. 5 zum Entlüften der Pneumatikanlage;
Fig. 12 unterschiedliche Betriebszustände A, B eines pneumatischen Systems der Fig. 6 zum Entlüften der Pneumatikanlage.

Im Folgenden werden für identische oder ähnliche Teile oder Teile identischer oder ähnlicher Funktion, wo zweckmäßig, gleiche Bezugszeichen verwendet.

Fig. 1 zeigt ein pneumatisches System 101 mit einer Druckluftversorgungsanlage 11 und einer Pneumatikanlage 901 in Form einer Luftfederanlage. Die Luftfederanlage weist eine Anzahl von vier sogenannten Bälgen 91 auf, die jeweils einem Rad eines nicht näher dargestellten Fahrzeugs zugeordnet sind und eine Luftfeder des Fahrzeugs bilden. Des Weiteren weist die Luftfederanlage einen Speicher 92 zur Speicherung schnell verfügbarer Druckluft für die Bälge 91 auf. Den Bälgen 91 ist jeweils in einer Balg-Zweigleitung 90 ein Magnetventil 93 vorgeordnet, welches jeweils als Niveauregelventil zum Öffnen oder Schließen einer mit einem Balg 91 gebildeten Luftfeder dient. Die Magnetventile 93 in den Balg-Zweigleitungen 90 sind als 2/2-Wegeventile ausgebildet. Dem Speicher 92 ist kann in einer Speicher-Zweigleitung 94 ein separates Magnetventil als Speicherventil vorgeordnet sein, dessen Funktion vorliegend durch die noch zu erläuternden Trennventilanordnung 900 mit übernommen wird. Die Magnetventile 93 sind mittels der Balg-Zweigleitungen 90 an eine Galerie-Leitung 95 angeschlossen, die eine gemeinsame pneumatische Sammelleitung bildet. Die Galerie-Leitung 95 ist über eine weitere Pneumatikleitung 96 zur Bildung einer pneumatischen Verbindung mit einem Druckluftanschluss 2 der Druckluftversorgungsanlage 11 pneumatisch verbunden. Vorliegend ist die Pneumatikanlage 901 mit einem Drucksensor 98 versehen, welcher über eine weitere Sensor-Zweigleitung 99 an der Galerie-Leitung 95 angeschlossen ist, so dass über den Drucksensor 98 ein Druck in der Galerie-Leitung 95 der Pneumatikanlage 901 gemessen werden kann. Ein Drucksensor 98 kann wie bei den Pneumatikanlagen 901, 903, 904 an der Galerie-Leitung 95 oder auch wie bei der Pneumatikanlage 902, am Speicher 92 angebracht sein. Die Magnetventile 93 sind zusammen mit dem einzigen Magnet-3/4-Wegeventil der Trennventilanordnung 900 in einem Ventilblock 97 mit fünf Ventilen angeordnet. Die Magnetventile 93 sind in Fig. 1 in einem stromlosen Zustand gezeigt -die Magnetventile 93 sind als stromlos geschlossene Magnetventile gebildet. Andere hier nicht gezeigte abgewandelte Ausführungsformen können eine andere Anordnung der Magnetventile 93 realisieren - es können weniger Magnetventile im Rahmen des Ventilblocks 97 genutzt werden. Die vorliegend vergleichsweise kompakt zusammen mit den Magnetventilen 93 in dem 5-fach Ventilblock 97 angeordnete Trennventilanordnung 900 ist in dieser Form Teil der Pneumatikanlage 901; ein Trennventil kann im Rahmen des Konzepts der Erfindung anders ausgestaltet und woanders in der pneumatischen Verbindung zur Druckluftversorgungsanlage 11 angeordnet werden.

Die Druckluftversorgungsanlage 11 dient zum Betreiben der Pneumatikanlage 901. Die Druckluftversorgungsanlage 11 weist eine Druckluftzuführung 1 und einen Druckluftanschluss 2 zur Pneumatikanlage 901 auf. Die Druckluftzuführung 1 ist vorliegend mit einer Luftzuführung 0, einem Luftverdichter 51 und einem Druckluftzuführungsanschluss 52 in Form einer geeignet ausgebildeten Schnittstelle gebildet. Der Luftzuführung 0 kann ein hier nicht gezeigter Filter vorgeordnet sein. Der Luftverdichter 52 wird durch einen Antrieb, vorliegend in Form eines Motors M, angetrieben. Die pneumatische Verbindung zwischen Druckluftversorgungsanlage 11 und Pneumatikanlage 901 ist vorliegend mittels einer einzigen Pneumatikhauptleitung 60 und diese in Reihenschaltung weiterführenden Pneumatikleitung 96 gebildet; die pneumatische Verbindung schließt also einerseits am Druckluftzuführungsanschluss 52 an die Luftzuführung 1 und anderseits über die Trennventilanordnung 900 an die Galerieleitung 95 an. Dazwischen weist die pneumatische Verbindung einen Lufttrockner 61 und eine erste Drossel 62 auf. Eine steuerbare Trennventilanordnung 900 ist mit einem Magnetventil als 3/4-Wegeventil ausgebildet. Die Drossel 62 und die Trennventilanordnung 900 bilden eine pneumatische Reihenanordnung in der pneumatischen Verbindung, nämlich in der Pneumatikhauptleitung 60 mit Druckluftanschluss 2 und weiterer Pneumatikleitung 96.

Weiter weist die Druckluftversorgungsanlage 11 eine mit der Pneumatikhauptleitung 60 und einem Entlüftungsanschluss 3 zur Umgebung pneumatisch verbundene weitere pneumatische Verbindung, nämlich die Entlüftungsleitung 70, auf. Vorliegend ist die separate Entlüftungsleitung 70 am Druckluftzuführungsanschluss 52 an der Pneumatikhauptleitung 60 angeschlossen. In Richtung des Entlüftungsanschlusses 3 ist in der Entlüftungsleitung eine zweite Drossel 72 und ein steuerbares -vorliegend stromlos geschlossenes- Entlüftungsventil 73 angeordnet. Dem Entlüftungsanschluss 3 zur Umgebung nachgeordnet ist ein Filter 74. Die in Fig. 1 gezeigte Druckluftversorgungsanlage 11 sieht das Entlüftungsventil 73 als einziges und direkt geschaltetes Ventil zu direkten Schaltung eines Druckluftvolumens in der Entlüftungsleitung 70 vor. Ein zusätzliches Steuerventil ist bei der Druckluftversorgungsanlage 11 nicht vorgesehen.

Das Entlüftungsventil 73 ist Teil einer mit der Trennventilanordnung 900 gebildeten Magnetventilanordnung 80. Die Magnetventilanordnung 80 sieht eine erste Spule 81 für das steuerbare Trennventil 900 und eine von der ersten Spule 81 separat gebildete zweite Spule 82 für das steuerbare Entlüftungsventil 73 vor. Insbesondere ist die erste Spule 81 und die zweite Spule 82 mit jeweils einem separaten Spulenkörper gebildet und vorliegend mit separaten -hier so bezeichneten- dritten und vierten Steuerleitungen 83, 84 versehen. Die so bezeichnete dritte und vierte Steuerleitung 83, 84 sind mit der Fahrzeugsteuerung ECU eines nicht näher dargestellten Fahrzeugs verbunden.

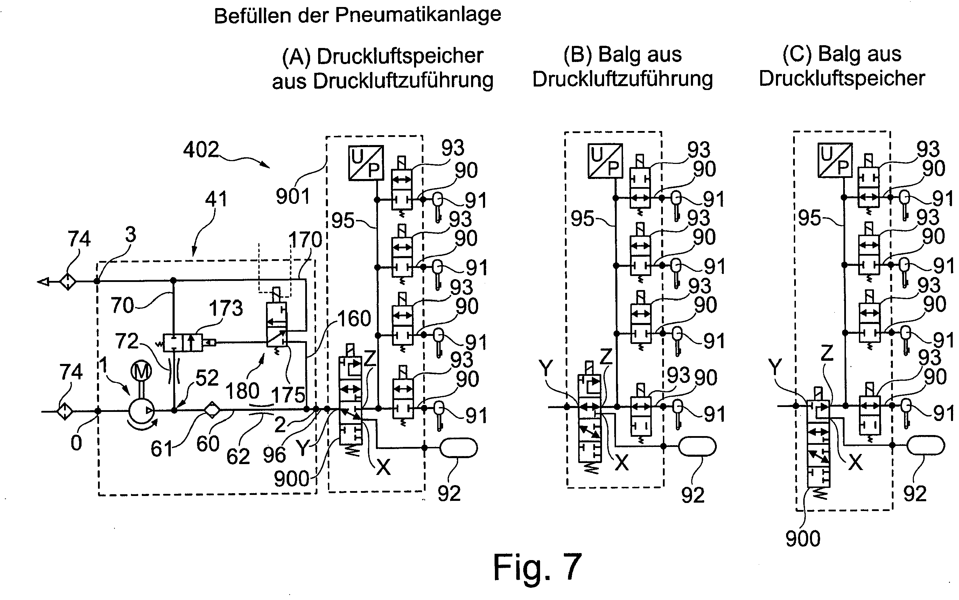

Die Trennventilanordnung 900 ist vorliegend in Form eines als Magnetventil ausgeführten 3/4-Wegenventils gebildet und hat dem Konzept der Erfindung folgend einen ersten Anschluss X, einen zweiten Anschluss Y und einen dritten Anschluss Z. An den ersten Anschluss X ist der Speicher 92 über die vorgenannte Speicher-Zweigleitung 94 pneumatisch angeschlossen. An den zweiten Anschluss Y ist der Druckluftanschluss 2 über die vorgenannte weitere Pneumatikleitung 96 pneumatisch angeschlossen. An den dritten Anschluss Z ist die Galerie-Leitung 95 pneumatisch angeschlossen. Die Trennventilanordnung 900 weist also drei Anschlüsse auf, an welche - je nach Betriebszustand des pneumatischen Systems 101 - als Druckluftabnehmer bzw. Druckluftzuführer dienende Komponenten gemeinsam pneumatisch angeschlossen sind, so dass diese über die Trennventilanordnung 900 in einer Komponente zusammen schaltbar sind. Die Komponenten umfassen vorliegend einen Speicher 92 (Anschluss über die Speicher-Zweigleitung), eine Druckluftversorgungsanlage 11 (Anschluss über die weitere Pneumatikleitung 96 und den Druckluftanschluss 2) und die Bälge 91 sowie den Drucksensor 98 (Anschluss über die Galerie-Leitung 95). Die Trennventilanordnung 900 kann dazu unterschiedliche Steuerzustände einnehmen, welche unterschiedlichen Betriebszuständen der Pneumatikanlage 901 zugeordnet sind und welche
- stellvertretend - für verschiedenste Ausführungsformen im Rahmen des Konzepts der Erfindung- für das pneumatische System 101 in Bezug auf die Fig. 7, Fig. 9, Fig. 11 im Einzelnen erläutert werden.

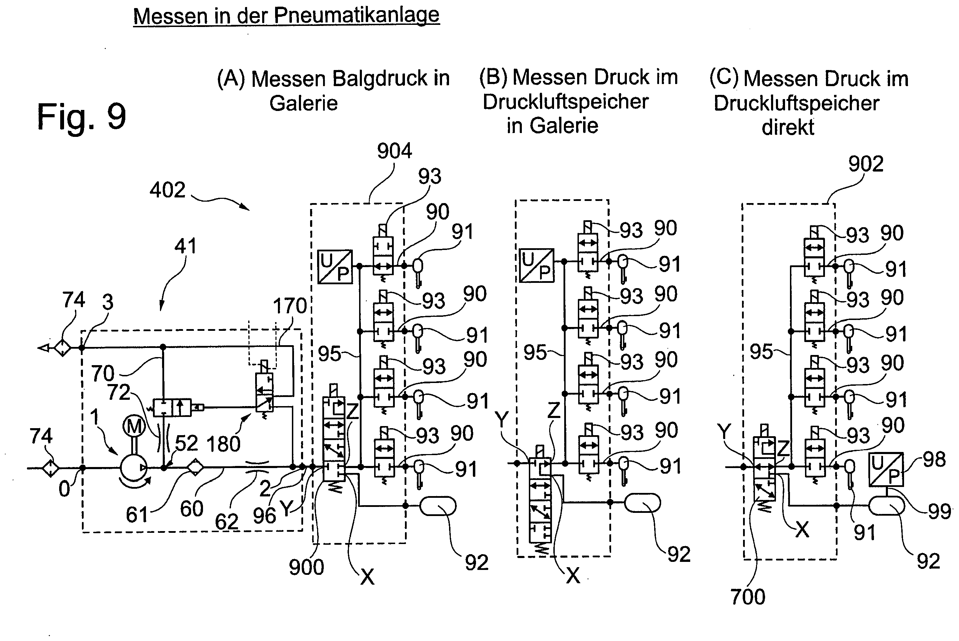

Insbesondere kann diese gemäß einer zweiten Variante der Erfindung gebildete Ausführungsform eines pneumatischen Systems 101 bzw. einer Pneumatikanlage 901 in Form einer Luftfederanlage -in abgewandelter Form- auch gemäß einer dritten Variante der Erfindung mit einer anderen Trennventilanordnung 700 gebildet sein, wie sie in Fig. 9C exemplarisch dargestellt ist. Die dort dargestellte Trennventilanordnung 700 ist mit einem Magnetventil als 3/3-Wegeventil ausgebildet und eignet sich mit besonderem Vorteil für eine Pneumatikanlage 902 der Fig. 9C, bei welcher der Drucksensor 98 über eine direkt am Speicher 92 anschließende Sensor-Zweigleitung 99 zur Druckmessung - d. h. nicht über die Galerie-Leitung 95, sondern direkt am Speicher 92 - vorgesehen ist. Auch die Trennventilanordnung 700 weist drei Anschlüsse X, Y, Z jeweils für eine Speicher-Zweigleitung 94 zu einem Speicher 92, einer Pneumatikleitung 96 zu einem Druckluftanschluss 2 einer Druckluftversorgungsanlage sowie zu einer Galerie-Leitung 95 auf. Grundsätzlich können die Erläuterungen betreffend die Ausführungsformen mit einem 3/4-Wegeventil der Fig. 1, Fig. 2 und Fig. 5 auch auf Ausführungsformen mit einem 3/3-Wegeventil gelesen werden, wo dieses als Detail D eingezeichnet ist. Der beim 3/4-Wegeventil vorhandene Schaltzustand, bei dem alle drei Anschlüsse X, Y, Z gesperrt sind kann beim 3/3-Wegeventil insbesondere dann entfallen, wenn wie in Fig. 9C der Drucksensor 98 direkt am Speicher anstatt an der Galerieleitung 95 angeschlossen ist.

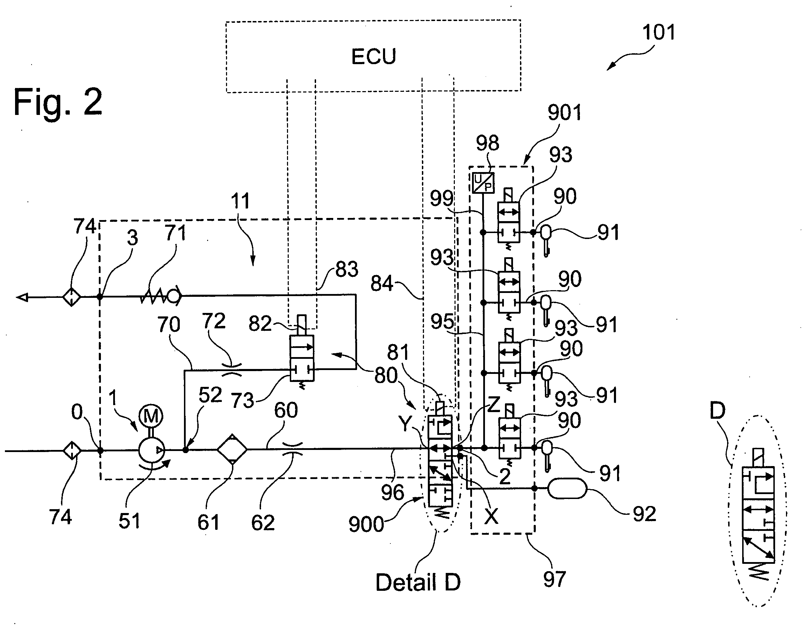

Fig. 2 zeigt eine leicht abgewandelte Ausführungsform eines pneumatischen Systems 201 mit einer Druckluftversorgungsanlage 21 und einer Pneumatikanlage 903, wobei zweckmäßiger Weise für identische oder ähnliche Teile oder Teile identischer oder ähnlicher Funktion gleiche Bezugszeichen verwendet sind. Im Folgenden wird lediglich auf die Unterschiede des pneumatischen Systems 201 im Vergleich zum pneumatischen System 101 Bezug genommen. Fig. 2 zeigt zunächst das Entlüftungsventil 73 in einer stromlos offenen Variante. Dem Entlüftungsanschluss 3 ist ein in der Entlüftungsleitung 70 angeordnetes Rückschlagventil 71 in Entlüftungsrichtung vorgeordnet, das besonders vorteilhaft zum Schließen der Druckluftversorgungsanlage 21 gegen die Umgebung dient. Die pneumatischen Systeme 101, 201 unterscheiden sich dadurch, dass die ansonsten identische Trennventilanordnung 900 nicht - wie bei der Pneumatikanlage 901 - innerhalb eines Ventilblocks 97' angeordnet ist, sondern vielmehr separat von den Magnetventilen 93 realisiert ist. Die Magnetventile 93 der Pneumatikanlage 903 sind vorliegend in einem 4-fach Magnetventilblock 97' angeordnet und bilden zusammen mit den Bälgen 91 jeweils Luftfedern. Die Luftfedern und der Speicher 92 bilden zusammen mit dem Drucksensor 98 die an der Galerie-Leitung 95 angeschlossenen Komponenten der Pneumatikanlage 903. Die Trennventilanordnung 900 ist beim pneumatischen System 201 der Fig. 2 entweder als Teil der Druckluftversorgungsanlage 21 in der Pneumatikhauptleitung 60 oder - wie vorliegend gezeigt- in der weiteren Pneumatikleitung 96, nämlich in Reihenanordnung mit dem Lufttrockner 61, der Drossel 62 und dem Druckluftanschluss 2 angeordnet. Vorliegend ist das 3/4-Wegeventil praktisch separat von der Druckluftversorgungsanlage 21 und separat von der Pneumatikanlage 905 realisiert.

Bei der genannten alternativen Ausführungsform weist nicht die Pneumatikanlage 903 die Trennventilanordnung 900 auf, sondern vielmehr ist die Trennventilanordnung 900 in der Pneumatikhauptleitung 60 der Druckluftversorgungsanlage 21, d.h. zwischen Drossel 62 und Druckluftanschluss 2 in einer Reihenanordnung angeordnet. Die Trennventilanordnung 900 weist wiederum einen zweiten Anschluss Y auf, an welchen der Druckluftanschluss 2 der Druckluftversorgungsanlage 21 direkt angeschlossen ist. Der erste Anschluss X ist wiederum zum Anschließen eines Speichers 92 der Pneumatikanlage 903 eingerichtet. Der dritte Anschluss Z ist wiederum zum Anschließen einer Galerie-Leitung 95 der Pneumatikanlage 903 eingerichtet. Auch für das in Fig. 2 dargestellte pneumatische System gelten die beispielhaft dargestellten Betriebsstellungen der Trennventilanordnung 900 für Betriebszustände des pneumatischen Systems, wie diese in Fig. 7, Fig. 9 und Fig. 11 dargestellt sind.

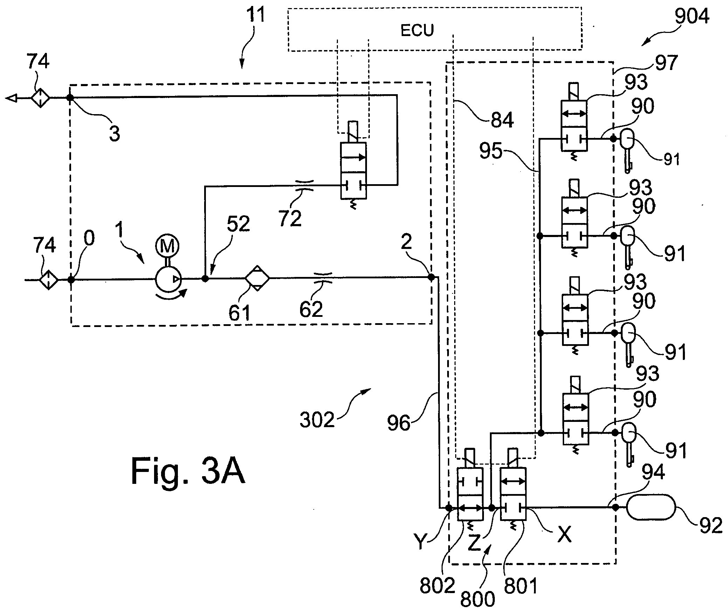

Fig. 3A zeigt ein pneumatisches System 302 mit einer Druckluftversorgungsanlage 11, wie sie bereits anhand von Fig. 1 beschrieben wurde, und mit einer Pneumatikanlage 904, die vorliegend ohne Drucksensor 98 dargestellt ist. Für die Druckluftversorgungsanlage 11 wird auf die Beschreibung der Fig. 1 verwiesen. Für die Pneumatikanlage 904 ist vorliegend eine Trennventilanordnung 800 gemäß einer ersten weiterbildenden Variante der Erfindung vorgesehen. Für die, bis auf die Trennventilanordnung 800 und einen Drucksensor 98, gleich ausgebildete Pneumatikanlage 904 wird auf die Beschreibung der Pneumatikanlage 901 in Fig. 1 Bezug genommen. Vorliegend weist die Trennventilanordnung 800 gemäß einer ersten Variante der Erfindung wiederum drei Anschlüsse X, Y, Z auf. Die Trennventilanordnung 800 ist mittels eines ersten Wegeventils 801, hier als 2/2-Wegeventil - im Folgenden auch Primärventil I - und eines zweiten Wegeventils 802, hier als 2/2-Wegeventil - im Folgenden auch Sekundärventil II - gebildet. Über den ersten Anschluss X ist der Speicher 92 am ersten Wegeventil 801 angeschlossen. Über den zweiten Anschluss Y ist der Druckluftanschluss 2 der Druckluftversorgungsanlage 11 über die weitere Pneumatikleitung 96 am zweiten Wegeventil 802 angeschlossen. An dem zwischen dem ersten und zweiten Wegeventil 801, 802 gebildeten dritten Anschluss Z ist die Galerie-Leitung 95 der Pneumatikanlage 904 angeschlossen.

Auch die mittels den zwei Wegeventilen 801, 802 gebildete Trennventilanordnung 800 ermöglicht mit drei Anschlüssen X, Y, Z -wie eine 3/4-Wegeventil oder ein 3/3-Wegeventil - das gemeinsame Schalten des Druckluftanschlusses 2, des Speichers 92 und der Galerie-Leitung 95 mit einer einzigen Trennventilanordnung 800.

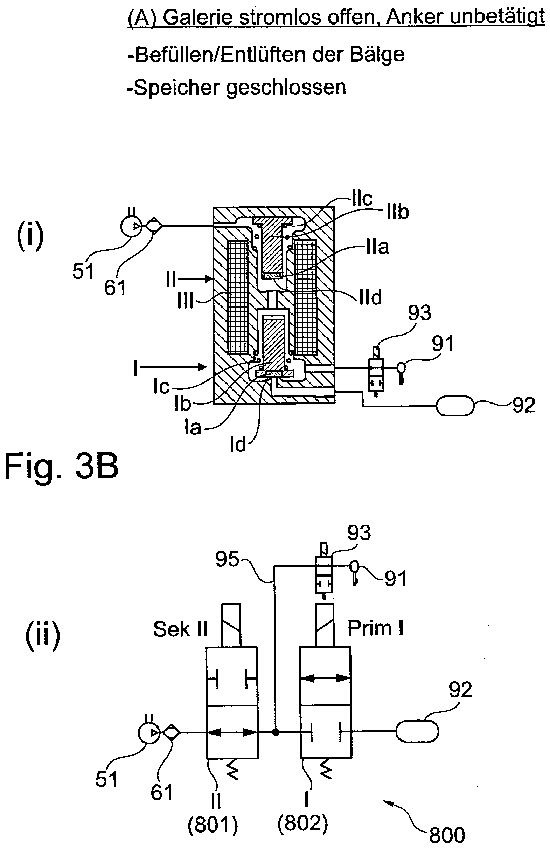

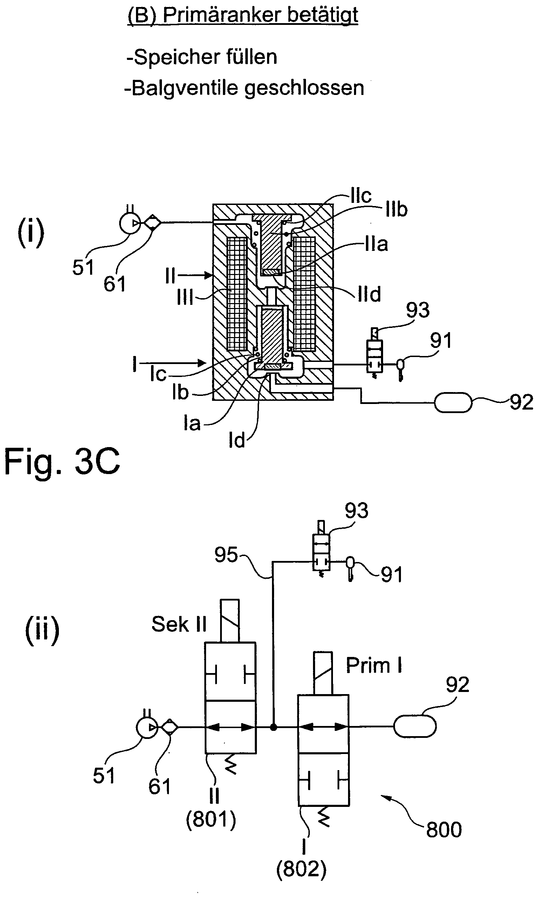

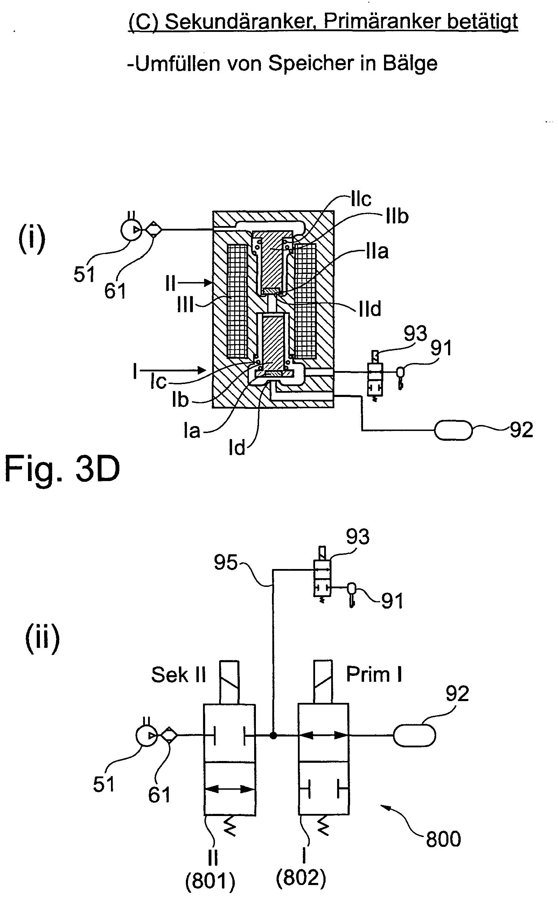

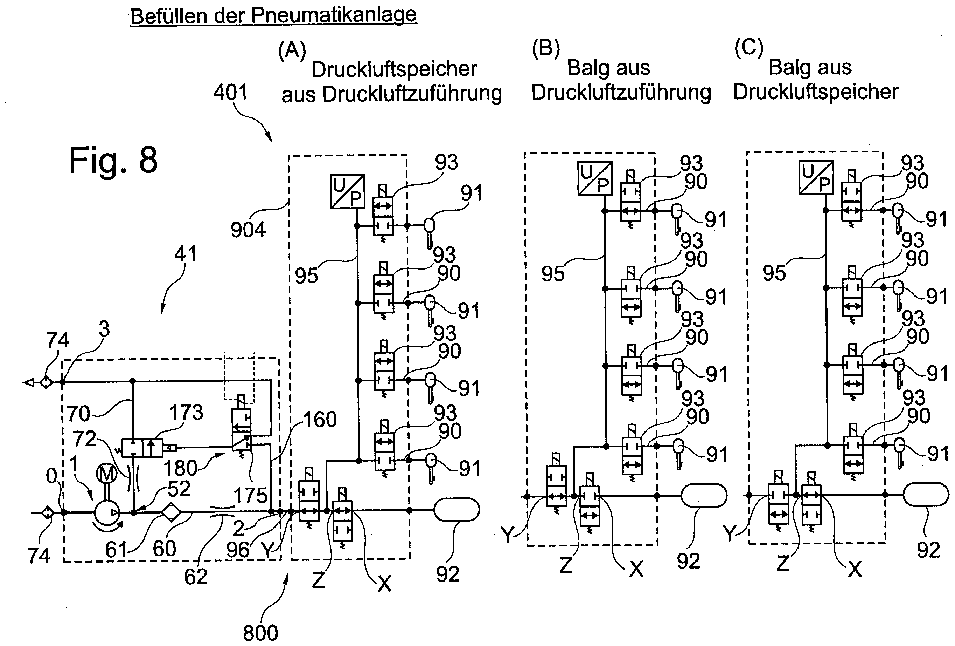

Fig. 3B, Fig. 3C, Fig. 3D zeigen in Zuordnung zueinander jeweils die Trennventilanordnung 800 zum einen in Ansicht (ii) und zum anderen in Ansicht (i) als ein Doppelanker-Magnetventil. Vorliegend ist eine Funktionsstellung der Trennventilanordnung 800 in Ansicht (ii) als Symbol gezeigt. Dazu ist in Ansicht (i) jeweils zugeordnet für die Funktionsstellung der Trennventilanordnung 800 eine Funktionsstellung des Doppelanker-Magnetventils gezeigt, mit dem sich die Magnetventilanordnung 800 besonders vorteilhaft realisieren lässt. Die in Fig. 3B, Fig. 3C, Fig. 3D gezeigten Schaltstellungen (A), (B), (C) verdeutlichen unterschiedliche pneumatische Kopplungen des Lufttrockners 61, des Speichers 92 und der Bälge 91 je nach Betriebszustand der Pneumatikanlage 904 bzw. des pneumatischen Systems 302. Die Betriebszustände sind im Detail exemplarisch mit unterschiedlichen Funktionsstellungen einer Trennventilanordnung 800 auch in Fig. 8, Fig. 10 und Fig. 12 beispielhaft erläutert.

Das erste und zweite Wegeventil 801, 802 ist in Fig. 3B jeweils als Primärventil I bzw. Sekundärventil II bezeichnet. Das Primärventil I weist ein erstes Dichtelement Ia sowie einen Primäranker Ib auf, an dem das erste Dichtelement Ia befestigt ist. In Ansicht (A) sitzt das erste Dichtelement Ia auf einem Ventilsitz Id auf und wird dort durch eine Ventilfeder Ic gehalten. Der so verschlossene Ventilsitz Id führt zur geschlossenen Stellung des ersten Wegeventils 801 (Primärventil I), wie es in Ansicht (ii) der Ansicht (A) der Fig. 3B symbolisch gezeigt ist.

Weiter ist in Ansicht (A) der Fig. 3B zu erkennen, dass für das Sekundärventil II im Doppelanker-Magnetventil ein Sekundäranker IIb mit einem zweiten Dichtelement IIa vorgesehen ist, wobei das zweite Dichtelement IIa in der in Ansicht (A) der Fig. 3B gezeigten Funktionsstellung des Doppelanker-Magnetventils durch die Ventilfeder IIc vom Ventilsitz IId abgehoben ist. Diese Stellung erfolgt ohne Bestromung der für Primärventil I und Sekundärventil II gemeinsamen Spulenkörpers III. In der so gezeigten Stellung mit abgefallenen Primär- und Sekundärankern Ib, IIb ist das erste Wegeventil 801 (Primärventil I) stromlos geschlossen und das zweite Wegeventil 802 (Sekundärventil II) stromlos offen. Deshalb kann eine Pneumatikanlage 904 vorteilhaft genutzt werden, ein bei Niveauregelanlagen ggf. häufiges Entlüften, Absenken oder Heben aus der Druckluftzuführung 1 unter Schalten von Balgventilen 93 durchzuführen, ohne die Trennventilanordnung 800 betätigen zu müssen.

Bei Bestromung wirkt der Spulenkörper III induktiv auf den Sekundäranker IIb und das zweite Dichtelement IIa wird gegen die Kraft einer Ventilfeder IIc auf den Ventilsitz IId gedrückt. Weiter wirkt bei Bestromung der Spulenkörper III induktiv auf den Primäranker Ib und das erste Dichtelement Ia wird gegen die Kraft einer Ventilfeder Ic vom Ventilsitz Id gehoben.

Ansicht (B) der Fig. 3C zeigt das Doppelanker-Magnetventil in Ansicht (i) unter Bestromung, die derart ist, dass nunmehr nur der Primäranker Ib bewegt ist und das erste Dichtelement Ia vom Ventilsitz Id abgehoben ist. In der so gezeigten Funktionsstellung ist sowohl das erste Wegeventil 801 (Primärventil I) als auch das zweite Wegeventil 802 (Sekundärventil II) geöffnet. Für eine solche Funktionsstellung der Trennventilanordnung 800 ist vorteilhaft ein Balgventil 93 geschlossen.

Wird die Bestromung des Spulenkörpers III unterhalb eines Haltestroms für das Sekundärventil II gesenkt, wird aber die Bestromung oberhalb eines Schaltstroms des Primärventils I belassen, ergibt sich - insofern bei voller Bestromung - die Funktionsstellung der Ansicht (C) der Fig. 3D, in welcher das Sekundärventil II geschlossen ist und das Primärventil I geöffnet ist. Mit anderen Worten ist, wie aus Ansicht (i) der Fig. 3D ersichtlich, der Primäranker Ib an einer Position, bei welcher das erste Dichtelement Ia vom Ventilsitz Id abgehoben ist. Der Sekundäranker IIb ist in einer Position, in welcher das zweite Dichtelement IIa auf dem Ventilsitz IId aufsitzt. Diese Funktionsstellung hat insbesondere den Vorteil, dass ein Balg 91 aus dem Speicher 92 befüllt werden kann und der Lufttrockner 61 in der Druckluftversorgungsanlage 11 dennoch abgesperrt ist. Eine solche Umfüllaktion beeinträchtigt somit nicht den Lufttrockner 61.

Die Stromgrenzen für Schaltströme, Halteströme bzw. Rückstellströme des Primärventils I und Sekundärventils II lassen sich geeignet in Abstimmung mit den Federkräften der Ventilfedern Ic, IIc abstimmen. Induktionskräfte auf den Primäranker Ib und Sekundäranker IIb lassen sich gegen Federkräfte derart abstimmen, dass das Primärventil I und das Sekundärventil II bei Bestromung des Spulenkörpers III geeignet schalten. Deshalb lässt sich für das Primärventil I und das Sekundärventil II eine in Fig. 3A erkennbare gemeinsame so bezeichnete vierte Steuerleitung 84 mit einem für das erste Wegeventil 801 und zweite Wegeventil 802 gemeinsamen Steuersignal belegen. In dieser Bauform ist die Trennventilanordnung 800 als Doppelanker-Magnetventil vergleichsweise einfach und ähnlich kompakt wie die Trennventilanordnung 900 oder 700 zu realisieren.

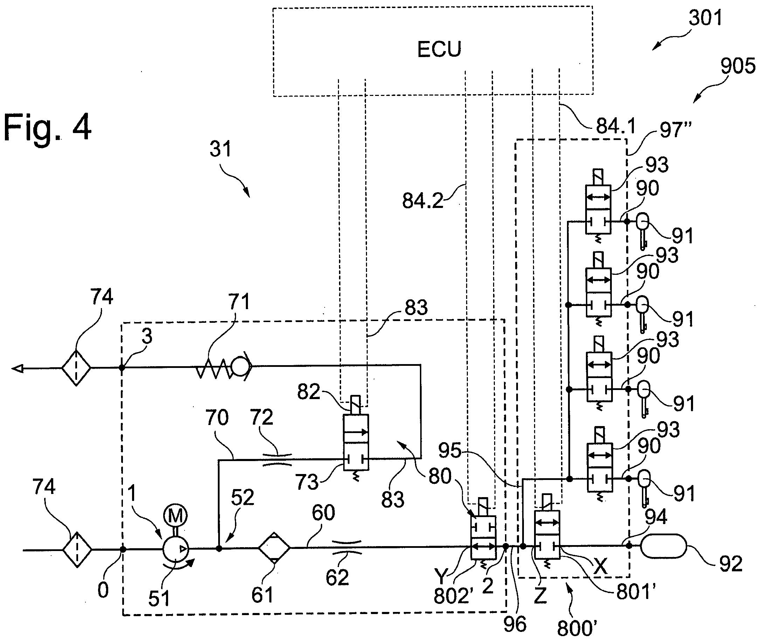

Fig. 4 zeigt eine im Vergleich zu Fig. 3A abgewandelte Ausführungsform eines pneumatischen Systems 301 mit einer Druckluftversorgungsanlage 31 und einer abgewandelten Pneumatikanlage 905. Das pneumatische System 301 weist im Unterschied zum pneumatischen System 302 der Fig. 3A eine abgewandelte Trennventilanordnung 800' auf -wiederum mit erstem Wegeventil 801' und zweitem Wegeventil 802'. Im Unterschied zum pneumatischen System 302 der Fig. 3A ist das erste Wegeventil 801' und das zweite Wegeventil 802' nicht als Doppelanker-Magnetventil realisiert. Vielmehr ist vorliegend für jedes der Wegeventile 801', 802' eine separate so bezeichnete erste und zweite Steuerleitung 84.1 bzw. 84.2 vorgesehen. Darüber hinaus sind die Wegeventile 801', 802'als separate 2/2-Wegevenile gebildet. Das erste Wegeventil 801' ist als Teil eines 5-fach Ventilblocks 97" zusammen mit den weiteren Magnetventilen 93 realisiert -also als Teil der Sequenz von fünf 2/2-Wegeventilen in dem 5-fach Ventilblock 97". Dagegen ist das zweite Wegeventil 802' in der Pneumatikhauptleitung 60 jenseits des Druckluftanschlusses 2 in der Druckluftversorgungsanlage 31 angeordnet. In der hier gezeigten Ausführungsform ist also das zweite Wegeventil 802'der Druckluftversorgungsanlage 31 zugeordnet und in der Pneumatikhauptleitung 60 derselben angeordnet, vorliegend zwischen Drossel 62 und Druckluftanschluss 2 ähnlich wie dies bereits in Bezug auf das 3/4-Wegeventil der Fig. 2 erläutert ist.

In hier nicht gezeigten Abwandlungen kann das zweite Wegeventil 802' stattdessen in der weiteren Pneumatikleitung 96 zum Druckluftanschluss 2 mit der Pneumatikanlage 905 oder auch separat von der Pneumatikanlage 905 gebildet sein. Ansonsten ist die Druckluftversorgungsanlage 31 wie die Druckluftversorgungsanlage 11 der Fig. 1 aufgebaut, so dass vorliegend auf die Beschreibung der Druckluftversorgungsanlage 11 Bezug genommen wird. Das in Fig. 4 gezeigte pneumatische System 301 sieht somit für einen Entlüftungsvorgang aus dem Speicher 92 der Pneumatikanlage 905 drei zu durchströmende 2/2-Wegeventile vor -nämlich das erste Wegeventil 801' als Teil der Trennventilanordnung 800' in der Pneumatikanlage 905 und als Teil des Ventilblocks 97" sowie das zweite Wegeventil 802' als Teil der Trennventilanordnung 800', sei es in der Pneumatikhauptleitung 60 oder in der weiteren Pneumatikleitung 96, und schließlich das Entlüftungsventil 73 in der Druckluftversorgungsanlage 31. Vorliegend sind alle drei 2/2-Wegeventile über separate Steuerleitungen an die ECU angebunden -nämlich die erste Steuerleitung 84.1, die zweite Steuerleitung 84.2 und die dritte Steuerleitung 83.

In einer hier nicht gezeigten abgewandelten bevorzugten konstruktiven Realisierung lässt sich das Entlüftungsventil 73 und das zweite Wegeventil 802' der Trennventilanordnung 800' vergleichsweise kompakt in Form eines Doppelanker-Magnetventils realisieren, wobei sowohl das Entlüftungsventil 73 als auch das zweite Wegeventil 802' in einem gemeinsamen Spulenkörper und über eine gemeinsame Steuerleitung ansteuerbar sind.

Fig. 5 zeigt eine weitere besonders bevorzugte Ausführungsform einer Druckluftversorgungsanlage 41 als Teil eines pneumatischen Systems 402 zur Versorgung einer Pneumatikanlage 901. Wiederum wird für identische oder ähnliche Teile oder Teile identischer oder ähnlicher Funktion gleiche Bezugszeichen verwendet. Im Folgenden werden insbesondere die Unterschiede zu den Druckluftversorgungsanlagen 11, 21, 31 erläutert und darüber hinaus ist auf die vorherigen Beschreibungen zu verweisen. Die Druckluftversorgungsanlage 41 weist eine Pneumatikhauptleitung 60 und eine Entlüftungsleitung 70 auf. In der Pneumatikhauptleitung 60 ist ähnlich wie bei den zuvor erläuterten Ausführungsformen ein Lufttrockner 61 und eine erste Drossel 62 angeordnet. Das steuerbare Trennventil 900 und die Drossel 62 bilden eine Reihenanordnung in der pneumatischen Verbindung zwischen Pneumatikanlage 901 und Druckluftversorgungsanlage 41 derart, dass die pneumatische Verbindung für eine Druckluftströmung bidirektional und vollständig schließbar ist. Gleichzeitig sind über drei Anschlüsse X, Y, Z alle Komponenten -Druckluftversorgungsanlage 11, Speicher 92 und Bälge 91- flexibel schaltbar. Die Entlüftungsleitung 70 ist an die Pneumatikhauptleitung 60 über an einen Druckluftzuführungsanschluss 52 angeschlossen und weist zwischen dem Druckluftzuführungsanschluss 52 und dem Entlüftungsanschluss 3 ein steuerbares Entlüftungsventil 173 auf. Im Unterschied zu den zuvor erläuterten Ausführungsformen ist das Entlüftungsventil 173 Teil einer Magnetventilanordnung 180 zur indirekten Schaltung eines Druckluftvolumens. Das Entlüftungsventil 173 ist dabei als indirekt geschaltetes Relaisventil Teil der Magnetventilanordnung 180, das durch ein Steuerventil 175 gesteuert wird. Das Steuerventil 175 ist vorliegend über eine von der Pneumatikhauptleitung 60 abgehende Steuer-Zweigleitung 160 einem Gesamtdruck einer Druckströmung in der Pneumatikhauptleitung 60 ausgesetzt. Je nach Gestaltung der ersten Drossel 62 kann das Steuerventil 175 auch einem Teildruck der Pneumatikhauptleitung 60 ausgesetzt sein.

Insbesondere ein lediglich einem Mindestdruck ausgesetztes Steuerventil 175 zur Steuerung des Relaisventils 173 ermöglicht eine vergleichsweise schnelle Entlüftung der Druckluftversorgungsanlage 41, da ein Vorsteuerdruck vergleichsweise niedrig ist. Vorliegend ist konkret das Steuerventil 175 der Magnetventilanordnung 180 in einem stromlos offenen Zustand. Das Entlüftungsventil 173 ist in einem vorgesteuerten Zustand. Es bedarf dann lediglich eines je nach Auslegung minimalen Betriebsdruckes, um das Entlüftungsventil 173 in den offenen Zustand zu versetzen. Vorteilhaft bei einer schnell entlüftenden Magnetventilanordnung 180 ist, dass aufgrund der vergleichsweise geringen Nennweite der ersten Drossel 62 lediglich ein kleiner Teildruck des Druckluftvolumens in der Pneumatikhauptleitung 60 zur Steuerung des Entlüftungsventils 173 über das Steuerventil 175 erforderlich ist. Gleichwohl wird das Hauptdruckvolumen über die Entlüftungsleitung 70 und die Drossel 72 sowie das Relaisventil 173 zum Entlüftungsanschluss 3 entlüftet. Ein Vorteil dieser schnell entlüftenden Magnetventilanordnung 180 bei der Druckluftversorgungsanlage 41 ist, dass nicht das gesamte Druckluftvolumen über ein einziges Magnetventil geschaltet werden muss, sondern bereits ein geringer Teildruck eines Druckluftvolumens über die Steuer-Zweigleitung 160 an das Steuerventil 175 ausreichend ist. Diese Auslegung als eine im Prinzip zwangsgesteuerte Ventilanordnung ermöglicht eine Erhöhung des Betriebsdruckes auf ein vergleichbar hohes Druckniveau. Gleichzeitig wird das Schalten hoher Druckluftvolumina über das Entlüftungsventil 173 möglich gemacht. Das als Relaisventil wirkende Entlüftungsventil 173 kann mit vergleichsweise großer Nennweite ausgelegt werden. Darüber hinaus wird das Verhältnis der Nennweite der ersten Drossel 62 zur Nennweite der zweiten Drossel 72 so gebildet, dass dennoch eine wirksame Regeneration des Lufttrockners 61 bei einer Entlüftung der Druckluftversorgungsanlage 41 möglich ist.

Im geschlossenen Zustand ist das Steuerventil 175 über die Entlüftungs-Zweigleitung 170 zum Entlüftungsanschluss 3 hin offen, wobei die weitere Entlüftungs-Zweigleitung 170 vor dem Entlüftungsanschluss 3 mit der Entlüftungsleitung 70 zusammengeführt wird.

Ansonsten ist die Funktion der Druckluftversorgungsanlage 41 hinsichtlich des Trennventils 900 und des Entlüftungsventils 173 analog zu der Funktionsweise der zuvor erläuterten Druckluftversorgungsanlagen 11, 21, 31. An die Druckluftversorgungsanlage 41 ist eine Pneumatikanlage 901 in einer bereits in Fig. 1 erläuterten Weise über den Druckluftanschluss 2 und die weitere Pneumatikleitung 96 angeschlossen. Zur Beschreibung der Pneumatikanlage 901 wird auf die Beschreibung der Fig. 1 Bezug genommen.

Fig. 6 zeigt ein pneumatisches System 401 mit einer Druckluftversorgungsanlage 41, wie bei Fig. 5, und einer Pneumatikanlage 904, wie bei Fig. 3A. Auf die entsprechende Beschreibungsteile der Fig. 3A und Fig. 5 wird entsprechend Bezug genommen. Insbesondere können die Stromamplituden für die Schaltströme im Hinblick auf das Trennventil 800 -nämlich Primärventil I (erstes Wegeventil 801) und Sekundärventil II (zweites Wegeventil 802)- und die Steuer- und Relaisventilanordnung aus Steuerventil 175 und Entlüftungsventil 173 analog gewählt werden.

Die folgenden Fig. 7, Fig. 9, Fig. 11 erläutern Funktionsstellungen einer Trennventilanordnung 900 bei unterschiedlichen Betriebsstellungen des in Fig. 5 gezeigten pneumatischen Systems 402. Die in den folgenden Figuren Fig. 8, Fig. 10, Fig. 12 gezeigten Funktionsstellungen der Trennventilanordnung 800 werden in Bezug auf ein pneumatisches System 401 der Fig. 6 gezeigt.

Fig. 7 und Fig. 8 zeigen in Ansichten (A), (B), (C) unterschiedliche Betriebsstellungen eines pneumatischen Systems 402, 401, welche zum Befüllen einer Pneumatikanlage 901, 904 dienen. In allen Betriebsstellungen ist ein Entlüftungsventil 173 der die Pneumatikanlage 901, 904 mit Druckluft versorgenden Druckluftversorgungsanlage 41 geschlossen. Das Befüllen der Pneumatikanlage 901, 904 erfolgt entweder über eine Pneumatikhauptleitung 60 der Druckluftversorgungsanlage 41 aus der Druckluftzuführung 1 oder aber aus dem Speicher 92 der Pneumatikanlage 901, 904. Fig. 7 zeigt die Betriebsstellungen für ein pneumatisches System 402 der Fig. 5, wobei die Druckluftversorgungsanlage 41 lediglich in Ansicht (A) für alle Ansichten der Fig. 7 gezeigt ist. Fig. 8 zeigt die Betriebsstellungen für ein pneumatisches System 401 der Fig. 6, wobei die Druckluftversorgungsanlage 41 lediglich in Ansicht (A) für alle Ansichten der Fig. 8 gezeigt ist.

Ansicht (A) der Fig. 7 bzw. Fig. 8 zeigen die Trennventilanordnung 900, 800 in einer Funktionsstellung, welche das Befüllen des Speichers 92 mit Druckluft aus der Druckluftzuführung 1 über die Pneumatikhauptleitung 60, den Druckluftanschluss 2 und die weitere Pneumatikleitung 96 sowie die Trennventilanordnung 900 bzw. 800 ermöglicht. Das 3/4-Wegemagnetventil der Trennventilanordnung 900 der Ansicht (A) der Fig. 7 befindet sich dazu in einer Funktionsstellung, in welcher eine Verbindung zwischen dem ersten Anschluss X und dem zweiten Anschluss Y offen ist. Auf diese Weise wird der Druckluftanschluss 2 zum Lufttrockner 61 und der Speicher 92 pneumatisch miteinander verbunden. Das 3/4-Wegemagnetventil wird dazu bestromt und von der in Fig. 5 gezeigten Stromlos-Stellung in die in Fig. 7A gezeigte Funktionsstellung gebracht. Bei Fig. 7A ist eine Befüllung der Galerie-Leitung 95 aufgrund der Funktionsstellung der Trennventilanordnung 900 vermieden, da der dritte Anschluss Z nicht pneumatisch offen ist zum zweiten Anschluss Y.

In Bezug auf Fig. 8 Ansicht (A) wird für die Trennventilanordnung 800 aus erstem Wegeventil 801 und zweitem Wegeventil 802 eine Bestromung derart vorgenommen, dass das durch das erste Wegeventil 801 gebildete Primärventil I von einer stromlos geschlossenen in eine stromlos offene Stellung übergeht. Auf diese Weise wird eine pneumatisch offene Verbindung zwischen dem ersten Anschluss X und zweiten Anschluss Y der Trennventilanordnung 800 hergestellt, so dass der Speicher 92 aus der Druckluftzuführung 1, der Pneumatikhauptleitung 60 und dem Druckluftanschluss 2 und die weitere Pneumatikleitung 96 über die Trennventilanordnung 800 mit Druckluft befüllt werden kann. Der zwischen dem ersten und zweiten Wegeventil 801, 802 offen angeschlossene dritte Anschluss Z öffnet prinzipiell die Galerie-Leitung 95 für Druckluft. Aufgrund der stromlos geschlossenen Magnetventile 93, die als Niveauregelventile jeweils einem Balg 91 vorgeordnet sind, wird eine Befüllung der Bälge 91 vermieden.

Ansicht (B) der Fig. 7 und Fig. 8 zeigt eine Funktionsstellung der Trennventilanordnung 900, 800, mittels der ein Befüllen der Bälge 91 aus der Druckluftzuführung 1 über die Pneumatikhauptleitung 60, den Druckluftanschluss 2, die weitere Pneumatikleitung 96 und jeweils die Trennventilanordnung 900, 800 möglich ist. Dazu ist die Trennventilanordnung 900, wie sie in Fig. 7 Ansicht (B) als 3/4-Wegemagnetventil gezeigt ist, in einer Funktionsstellung, bei welcher der dritte Anschluss Z und der zweite Anschluss Y pneumatisch offen miteinander verbunden sind. Diese Funktionsstellung des 3/4-Wegemagnetventils entspricht der Stromlos-Stellung der Trennventilanordnung 900. Ein Befüllen der Bälge aus der Druckluftzuführung 1 kann somit für alle oder einzelne oder Gruppen der Bälge erfolgen unter Durchschalten eines oder mehrerer oder aller der Magnetventile 93. In Fig. 7 Ansicht (B) ist ein Magnetventil 93 beispielhaft durchgeschaltet, so dass eine pneumatisch offene Verbindung des Balgs 91 zur GalerieLeitung 95 besteht und der Balg mit Druckluft aus der Druckluftzuführung 1 der Druckluftversorgungsanlage 41 befüllt werden kann.

In Fig. 8 Ansicht (B) wird zum Befüllen der Bälge die Magnetventilanordnung 800 ebenfalls im stromlosen Zustand gehalten. In diesem Zustand ist das das Primärventil I bildende erste Wegeventil 801 stromlos geschlossen und das das Sekundärventil II bildende zweite Wegeventil 802 stromlos geöffnet. Auf diese Weise besteht eine pneumatisch offene Verbindung zwischen dem dritten Anschluss Z zur Galerie-Leitung 95 und dem zweiten Anschluss Y zum Druckluftanschluss 2, während der erste Anschluss X geschlossen ist. D.h. die Galerie-Leitung 95 ist pneumatisch mit der Druckluftzuführung 1 verbunden, während eine pneumatische Verbindung zum Speicher 92 getrennt ist. Letzteres ist auch der Fall für die Trennventilanordnung 900 der Ansicht (B) der Fig. 7. Wiederum können einzelne, mehrere oder alle Bälge 91 der Pneumatikanlage 904 durch Öffnen einzelner, mehrerer oder aller Magnetventile 93 in Form der Niveauregelventile mit Druckluft befüllt werden.

Ansicht (C) der Fig. 7 und Fig. 8 zeigen eine Betriebsstellung des pneumatischen Systems 402 bzw. 401, in welcher eine Befüllung der Bälge 91 mit Druckluft aus dem Speicher 92 ermöglicht ist, wobei jedoch eine pneumatische Verbindung zwischen Druckluftzuführung 1 der Druckluftversorgungsanlage 41 und dem Speicher 92 bidirektional und vollständig getrennt ist. Mit anderen Worten ist ein Querschalten der Bälge 91 zum Speicher 92 über die Galerie-Leitung 95 und ein Umspeichern der Druckluft vom Speicher 92 in die Bälge 91 oder umgekehrt möglich, ohne dass die Druckluftversorgungsanlage 41 dadurch beeinträchtigt wird. Eine Beeinträchtigung, insbesondere des Lufttrockners 61 in der Druckluftversorgungsanlage 41 ist vorteilhaft vermieden. In Anlagen ohne Trennventilanordnung würde sich durch ein bloßes Umspeichern von Druckluft ein Druckluftverbrauch ergeben, der nur teilweise oder insgesamt ungenügend zur Regeneration des Lufttrockners 61 genutzt werden könnte, was vermeidbar ist. Mit der in Ansicht (C) der Fig. 7 und Fig. 8 gezeigten Funktionsstellung einer Trennventilanordnung 900, 800 ist es möglich, insbesondere den Lufttrockner 61 von einer Luftfederanlage zu entkoppeln und die Luftfederanlage unabhängig von der Druckluftversorgungsanlage 41 zu betreiben.

Dazu wird in Ansicht (C) der Fig. 7 das 3/4-Wegemagnetventil der Magnetventilanordnung 900 in eine Funktionsstellung gebracht, bei welcher der erste und der dritte Anschluss X, Z der Magnetventilanordnung 900 pneumatisch miteinander verbunden sind, während der zweite Anschluss Y zum Druckluftanschluss 2 pneumatisch getrennt ist. Auf diese Weise kann Druckluft aus dem Speicher 92 nur in die Galerie-Leitung 95 und nicht in den Druckluftanschluss 2 gelangen. Sobald eines, mehrere oder alle der in Ansicht (C) der Fig. 7 stromlos geschlossen gezeigten Magnetventile 93 öffnet, gelangt Druckluft in einen, mehrere oder alle der Bälge 91, was beispielsweise zur Niveauregelung und/oder Anheben einer Fahrzeugkarosserie genutzt werden kann.

In Fig. 8 Ansicht (C) ist die gleiche Funktion mit einer Trennventilanordnung 800 erreichbar, bei welcher das das Primärventil I bildende erste Wegeventil 801 aus einer stromlos geschlossenen in eine bestromt geöffnete Stellung gebracht wird und das das Sekundärventil II bildende zweite Wegeventil 802 von einer stromlos geöffneten in einer bestromt geschlossene Stellung gebracht wird. Mit Schaltung des Primärventils I in eine offene Stellung erfolgt eine offene pneumatische Verbindung zwischen dem Speicher 92 und der Galerie-Leitung 95. Mit dem Schalten des Sekundärventils II in eine geschlossene Stellung wird eine pneumatische Verbindung zwischen der Druckluftzuführung 1 und der Galerie-Leitung 95 getrennt. In dieser Funktionsstellung der Trennventilanordnung 800 kann also Druckluft aus dem Speicher 92 in die Galerie-Leitung 95 gelangen. Wiederum kann durch Öffnen eines, mehrerer oder aller der Magnetventile 93 Druckluft in einen, mehrere oder alle der Bälge 91 gelangen und zur Niveauregelung und/oder Anheben einer Fahrzeugkarosserie genutzt werden.

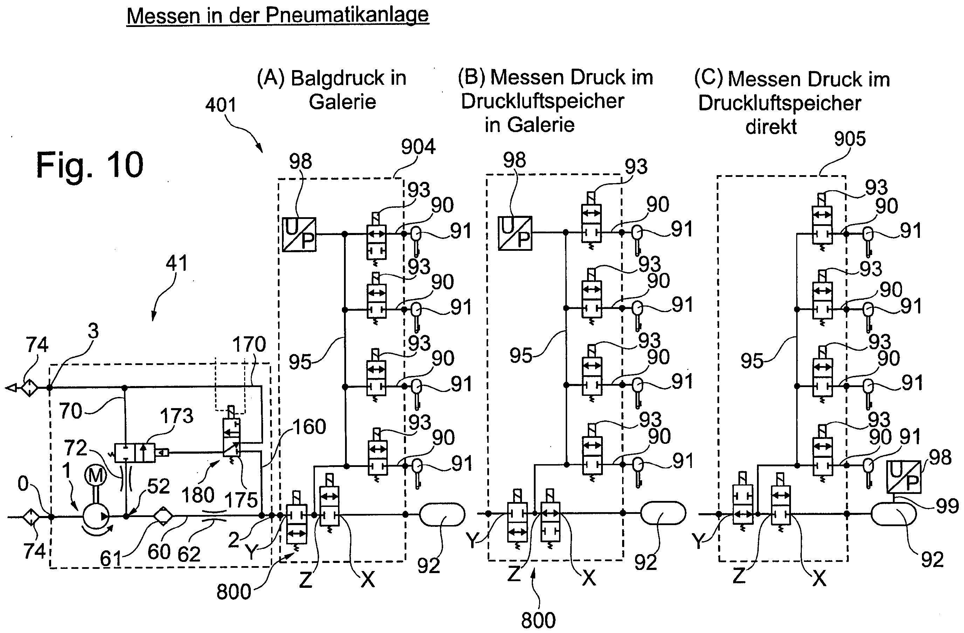

Fig. 9 und Fig. 10 zeigen in Ansichten (A), (B), (C), (D) unterschiedliche Betriebsstellungen, welche ein Druckmessen in der Pneumatikanlage 901 bzw. 904 ermöglicht bzw. ein Querschalten zwischen Bälgen 91 und Speicher 92, ohne dass eine Druckluftversorgungsanlage 41 beeinträchtigt wird.

Dazu zeigt Ansicht (A) der Fig. 9 eine Funktionsstellung der Trennventilanordnung 900, bei welcher sämtliche pneumatische Verbindungen zwischen den Anschlüssen X, Y, Z getrennt sind. Auf diese Weise kann eine Druckmessung über den an der Galerie-Leitung 95 angeschlossenen Drucksensor 98 erfolgen und zwar bevorzugt für einzelne Bälge 91; grundsätzlich je nachdem, ob einzelne, einige oder alle der Magnetventile 93 geöffnet oder in der stromlos geschlossenen Stellung befindlich sind.

In Ansicht (A) der Fig. 10 wird diese Betriebsstellung ermöglicht im Rahmen einer Funktionsstellung der Magnetventilanordnung 800, bei welcher das durch das erste Wegeventil 801 gebildete Primärventil I in der stromlos geschlossenen Stellung verbleibt und durch Bestromung das durch das zweite Wegeventil 802 gebildete Sekundärventil II in eine geschlossene Stellung gebracht wird. Dadurch werden ebenfalls alle drei Anschlüsse X, Y, Z pneumatisch voneinander getrennt. Wiederum ermöglicht dies eine Druckmessung in der Galerie-Leitung 95 für einzelne, mehrere oder alle der Bälge 91 über einen Drucksensor 98, welcher an der Galerie-Leitung 95 angeschlossen ist.

Ansicht (B) der Fig. 9 bzw. Fig. 10 zeigen eine Betriebsstellung des pneumatischen Systems 402 bzw. 401, in der in der Pneumatikanlage 901 bzw. 904 ein Druck im Speicher 92 über einen an der Galerie-Leitung 95 angeschlossenen Drucksensor messbar ist. Dazu wird die Pneumatikanlage 901 bzw. 904 in eine Betriebsstellung gebracht, in welcher der Speicher 92 mit der Galerie-Leitung 95 pneumatisch verbunden ist, während eine pneumatische Verbindung der Galerie-Leitung 95 zu den Bälgen 91 getrennt ist. Dazu werden die Magnetventile 93 in der stromlos geschlossenen Stellung gehalten. In Ansicht (B) der Fig. 9 wird die Trennventilanordnung 900 in Form des 3/4-Wegemagnetventils in eine Funktionsstellung gebracht, bei welcher eine pneumatische Verbindung zwischen dem ersten Anschluss X und dem dritten Anschluss Z hergestellt wird und eine pneumatische Verbindung zum zweiten Anschluss Y getrennt ist. Ein derart über das 3/4-Wegemagnetventil mit der Galerie-Leitung 95 verbundener Speicher 92 kann somit auch hinsichtlich einer Druckmessung von einem Drucksensor 98 in der Galerie-Leitung 95 erfasst werden.

In Ansicht (B) der Fig. 10 ist für die gleiche Betriebsstellung die Trennventilanordnung 800 in eine Funktionsstellung gebracht, bei welcher das durch das erste Wegeventil 801 gebildete Primärventil I bestromt offen und das durch das zweite Wegeventil 802 gebildete Sekundärventil II bestromt geschlossen ist. Mit anderen Worten wird die Stromlosstellung der Trennventilanordnung 800, wie sie in Fig. 8 (B) gezeigt ist, invertiert. Auf diese Weise ist der Speicher 92 pneumatisch mit der Galerie-Leitung 95 verbunden und ein Druck des Speichers 92 kann somit über einen Drucksensor 98, der an der Galerie-Leitung 95 angeschlossen ist, ausgelesen werden.

Ansicht (C) der Fig. 9 und Fig. 10 zeigen eine zu Ansicht (B) der Fig. 9 und Fig. 10 alternative Möglichkeit einer Druckmessung für einen Speicher 92, welche über einen Drucksensor 98 erfolgt, der über eine Sensor-Zweigleitung 99 direkt am Speicher 92 angeschlossen ist. Für diese Variante einer Pneumatikanlage 902 ist es ausreichend, eine Trennventilanordnung 700 vorzusehen, die in Form eines 3/3-Wegemagnetventils gebildet ist. In der in Ansicht (C) der Fig. 9 gezeigten Funktionsstellung der Trennventilanordnung 700 bleibt diese einfach in der Stromlosstellung ähnlich der in Fig. 5 gezeigten Funktionsstellung der 3/4-Wegeventilanordnung 900. Dazu ist der erste mit dem Speicher 92 verbundene Anschluss X von jeglicher pneumatischer Verbindung getrennt. Stattdessen wird die pneumatische Verbindung zwischen dem zweiten und dritten Anschluss Y, Z der Trennventilanordnung 700 aufrechterhalten. Der Speicher 92 ist somit von der übrigen Pneumatikanlage 902 als auch von der Druckluftversorgungsanlage 41 entkoppelt und ein Druck kann, wie beschrieben, direkt am Speicher 92 gemessen werden.

Wie in Ansicht (C) der Fig. 10 ersichtlich, lässt sich auch für die Variante 905 einer Pneumatikanlage mit einem direkt am Speicher 92 über eine Sensor-Zweigleitung 99 angeschlossener Drucksensor 98 eine Trennventilanordnung 800 nutzen. Die Trennventilanordnung 800 wird dazu in der in Fig. 6 gezeigten Stromlos-Stellung verbleiben und eine pneumatische Verbindung des ersten Anschlusses X, an dem der Speicher 92 angeschlossen ist, wird getrennt. Der Druck eines so von der übrigen Pneumatikanlage 905 entkoppelten Speichers 92 kann somit durch den Drucksensor 98 ausgemessen werden. Die übrige pneumatische Verbindung zwischen einem zweiten Anschluss und einem dritten Anschluss Y, Z der Trennventilanordnung 800 ist geöffnet.

Bei der Variante der Ansicht (C) der Fig. 9 als auch der Fig. 10 lässt sich parallel zur Druckmessung im Speicher 92 über die Trennventilanordnung 700, 800 ein Balg 91 aus der Druckluftzuführung 1 mit Druckluft füllen, wie dies anhand von Ansicht (B) der Fig. 7 bzw. Fig. 8 dargestellt ist.

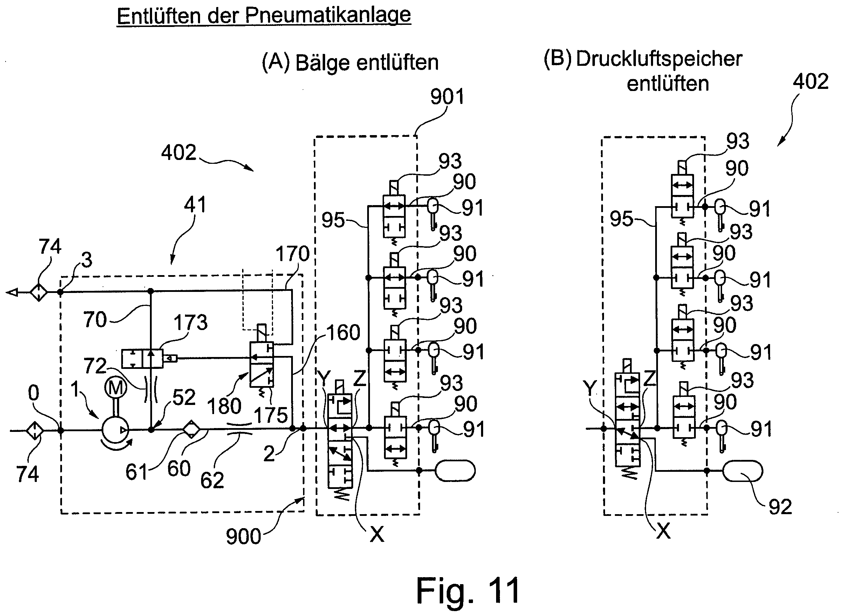

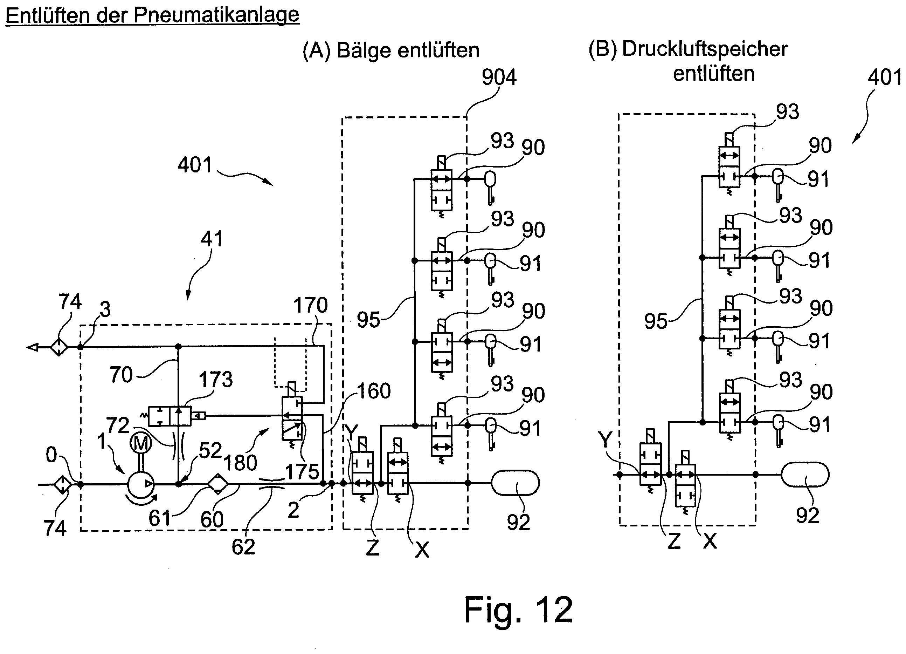

Fig. 11 und Fig. 12 zeigen Betriebsstellungen eines pneumatischen Systems 402 bzw. 401 jeweils mit einer Pneumatikanlage 901 bzw. 904 gemäß denen eine Entlüftung der Pneumatikanlage 901 bzw. 904 erfolgen kann. In beiden Fällen ist dazu eine Entlüftungsmagnetventilanordnung 180 geöffnet, so das die Pneumatikanlage 901 bzw. 904 über die Pneumatikhauptleitung 60, den Lufttrockner 61 und die Entlüftungsleitung 70 - dort über das als Relaisventil ausgebildete Entlüftungsventil 173 - zum Entlüftungsanschluss 3 entlüftet werden kann.

In Ansicht (A) der Fig. 11 und Fig. 12 ist eine Entlüftung der Bälge 91 vorgesehen. Dazu ist die Trennventilanordnung 900 in einer Stromlos-Stellung, wie sie in Fig. 5 gezeigt ist, so dass eine pneumatische Verbindung zwischen der Galerie-Leitung 95 und dem Entlüftungsanschluss 3 besteht. Zum Entlüften einer oder mehrerer der Bälge 91 ist es lediglich erforderlich, eines oder mehrere der Niveauregelventile, d.h. der Magnetventile 93, zu öffnen. Möglichst wird dabei ein gleichzeitiges Öffnen aller Magnetventile 93 vermieden, um ein plötzliches Absacken eines Fahrzeugs zu vermeiden.

In der in Ansicht (A) der Fig. 12 gezeigten Pneumatikanlage 904 ist die Trennventilanordnung 800 ebenfalls in der in Fig. 6 gezeigten Stromlos-Stellung, nämlich mit einem stromlos geschlossenen ersten Wegeventil 801 zur Bildung eines geschlossenen Primärventils I und mit einem stromlos offenen Wegeventil 802 zur Bildung eines offenen Sekundärventils II. Dadurch ist, wie bei der Trennventilanordnung 900, einerseits der Speicher 92 von der Galerie-Leitung 95 pneumatisch getrennt und zum anderen die Galerie-Leitung 95 pneumatisch offen mit dem Entlüftungsanschluss 3 verbunden.

Um in Ausnahmefällen - wie einem thermisch bedingten Druckanstieg- auch den Speicher 92 entlüften zu können, ist -wie in Ansicht (B) der Fig. 11 und Fig. 12 gezeigt- eine Trennventilanordnung 900, 800 in eine Funktionsstellung gebracht, bei welcher der Speicher 92 eine pneumatisch offene Verbindung zum Entlüftungsanschluss 3, nämlich über die Pneumatikleitung 96, die Pneumatikhauptleitung 60 und die Entlüftungsleitung 70 hat. Aus Ansicht (B) der Fig. 11 ist ersichtlich, dass die Trennventilanordnung 900 dazu in einer Funktionsstellung ist, bei welcher eine pneumatisch offene Verbindung zwischen dem ersten Anschluss X und dem zweiten Anschluss Y besteht, während eine pneumatische Verbindung des dritten Anschlusses Z getrennt ist. Auf diese Weise kann selbst bei offenen Niveauregelventilen, d.h. Magnetventilen 93 der Luftfedern, ungefährdet eine Entlüftung des Speichers 92 erfolgen.

Bei der in Ansicht (B) der Fig. 12 gezeigten Trennventilanordnung 800 erfolgt eine Entlüftung des Speichers 92 bei offener Galerie-Leitung 95, d.h. die Galerie-Leitung 95 hat eine pneumatische Verbindung über den dritten Anschluss Z und den zweiten Anschluss Y zum Entlüftungsanschluss 3. Um dabei ein ungewolltes Befüllen oder Entlüften auch der Bälge 91 zu verhindern, ist es erforderlich, dass die Niveauregelventile, d.h. die Magnetventile 93 geschlossen sind.

### Bezugszeichenliste (Bestandteil der Beschreibung)

- 0: Luftzuführung
- 1: Druckluftzuführung
- 2: Druckluftanschluss
- 3: Entlüftungsanschluss
- 11, 21, 31, 41: Druckluftversorgungsanlage
- 51: Luftverdichter
- 52: Druckluftzuführungsanschluss
- 60: Pneumatikhauptleitung
- 61: Lufttrockner
- 62: erste Drossel (Drosselmittel)
- 70: Entlüftungsleitung
- 71: Rückschlagventil
- 72: zweite Drossel
- 73, 173: Entlüftungsventil
- 74: Filter
- 80, 180: Magnetventilanordnung
- 81: erste Spule
- 82: zweite Spule
- 83: dritte Steuerleitung
- 84: vierte Steuerleitung
- 84.1, 84.2: erste Steuerleitung, zweite Steuerleitung
- 90: Balg-Zweigleitung
- 91: Balg
- 92: Speicher
- 93: Magnetventil
- 94: Speicher-Zweigleitung
- 95: Galerieleitung
- 96: weitere Pneumatikleitung
- 97, 97": Ventilblock
- 97': 4-fach Ventilblock
- 98: Spannungsdrucksensor
- 99: Sensor- Zweigleitung
- 101, 201, 301, 302, 401, 402: pneumatisches System
- 160: Steuer-Zweigleitung
- 170: Entlüftungs-Zweigleitung
- 175: Steuerventil
- 700, 800, 800', 900: Trennventilanordnung
- 801, 801': erstes Wegeventil
- 802, 802': zweites Wegeventil
- 901, 902, 903, 904, 905: Pneumatikanlage
- M: Motor
- X: erster Anschluss
- Y: zweiter Anschluss
- Z: dritter Anschluss
- I: Primärventil
- II: Sekundärventil
- Ia, IIa: Dichtelement
- Ib: Primäranker
- IIb: Sekundäranker
- Ic, IIc: Ventilfeder
- Id, IId: Ventilsitz
- III: Spulenkörper

## Patentansprüche

1. Luftfederanlage für ein Fahrzeug mit einer Pneumätikanlage (901, 902, 903, 904, 905), die zum Betrieb mit einer Druckluftversorgungsanlage (11, 21, 31, 41), insbesondere nach Anspruch 14, eingerichtet ist, aufweisend:
- eine Galerieleitung (95) an die
eine Anzahl von jeweils als Druckkammer für eine Luftfeder dienende Bälge (91) und eine steuerbare, aus wenigstens einem Wegeventil gebildete Trennventilanordnung (700, 800, 800', 900) derart angeschlossen ist, dass die Pneumatikanlage (901, 902, 903, 904, 905) aus der Druckluftversorgungsanlage (11, 21, 31, 41) über die Trennventilanordnung (700, 800, 800', 900) befüllbar und entlüftbar ist, wobei
- die Trennventilanordnung einen ersten, zweiten und dritten Anschluss (X, Y, Z) aufweist, wobei pneumatisch angeschlossen ist:
an den ersten Anschluss (X) ein Speicher (92),
an den zweiten Anschluss (Y) über eine Pneumatikleitung (96) ein Druckluftanschluss (2) zu einem Lufttrockner (61) der Druckluftversorgungsanlage (11, 21, 31, 41), und
an den dritten Anschluss (Z) die Galerieleitung (95), und wobei
die Trennventilanordnung (700, 800, 800', 900) zur Einnahme von wenigstens drei Schaltstellungen ausgebildet ist, wobei in wenigstens einer der Schaltstellungen der zweite Anschluss (Y) der Trennventilanordnung (700, 800, 800', 900) in einen geschlossenen Zustand schaltbar ist, in dem die Pneumatikleitung (96) zwischen Galerieleitung (95) und Lufttrockner (61) bidirektional und vollständig geschlossen ist, **dadurch gekennzeichnet, dass**
die Trennventilanordnung (800, 800') mittels eines ersten und eines zweiten Wegeventils (801, 801', 802, 802') gebildet ist, wobei der dritte Anschluss (Z) pneumatisch zwischen dem ersten Wegeventil (801, 801') und dem zweiten Wegeventil (802, 802') gebildet ist.

2. Luftfederanlage für ein Fahrzeug mit einer Pneumatikanlage (901, 902, 903, 904, 905), die zum Betrieb mit einer Druckluftversorgungsanlage (11, 21, 31, 41), insbesondere nach Anspruch14, eingerichtet ist, aufweisend:
- eine Galerieleitung (95) an die
eine Anzahl von jeweils als Druckkammer für eine Luftfeder dienende Bälge (91) und eine steuerbare, aus wenigstens einem Wegeventil gebildete Trennventilanordnung (700, 800, 800', 900) derart angeschlossen ist, dass die Pneumatikanlage (901, 902, 903, 904, 905) aus der Druckluftversorgungsanlage (11, 21, 31, 41) über die Trennventilanordnung (700, 800, 800', 900) befüllbar und entlüftbar ist, wobei
- die Trennventilanordnung einen ersten, zweiten und dritten Anschluss (X, Y, Z) aufweist, wobei pneumatisch angeschlossen ist:
an den ersten Anschluss (X) ein Speicher (92),
an den zweiten Anschluss (Y) über eine Pneumatikleitung (96) ein Druckluftanschluss (2) zu einem Lufttrockner (61) der Druckluftversorgungsanlage (11, 21, 31, 41), und
an den dritten Anschluss (Z) die Galerieleitung (95), und wobei
die Trennventilanordnung (700, 800, 800', 900) zur Einnahme von wenigstens drei Schaltstellungen ausgebildet ist, wobei in wenigstens einer der Schaltstellungen der zweite Anschluss (Y) der Trennventilanordnung (700, 800, 800', 900) in einen geschlossenen Zustand schaltbar ist, in dem die Pneumatikleitung (96) zwischen Galerieleitung (95) und Lufttrockner (61) bidirektional und vollständig geschlossen ist, **dadurch gekennzeichnet, dass**
die Trennventilanordnung (700, 900) mittels eines einzigen Wegeventils (700, 900) gebildet ist.

3. Luftfederanlage nach Anspruch 1 oder 2,
**dadurch gekennzeichnet, dass**
die Trennventilanordnung (700, 800, 800', 900) die einzige Ventilanordnung zwischen der Galerieleitung (95) und dem Lufttrockner (61), insbesondere zwischen der Galerieleitung (95) und dem Druckluftanschluss (2) zum Lufttrockner (61) ist, vorzugsweise die einzige Ventilanordnung in einer einzigen Pneumatikleitung (96) zwischen der Galerieleitung (95) und dem Druckluftanschluss (2) zum Lufttrockner (61) ist.

4. Luftfederanlage nach Anspruch 1 oder 2 oder 3,
**dadurch gekennzeichnet, dass** ein Balg (91) der Anzahl von Bälgen (91) über ein Wegeventil in Form eines Magnetventils (93) in einer Balg-Zweigleitung (90) an die Galerie (95) angeschlossen und/oder der Speicher (92) über eine Speicher-Zweigleitung (94) an den ersten Anschluss (X) der Trennventilanordnung (700, 800, 800', 900) angeschlossen ist.

5. Luftfederanlage nach einem der Ansprüche 1 bis 4,
**dadurch gekennzeichnet, dass**
die Trennventilanordnung (800, 800', 900) zur Einnahme von vier Schaltstellungen ausgebildet ist.

6. Luftfederanlage nach Anspruch 1,
**dadurch gekennzeichnet, dass** der erste Anschluss (X) am ersten Wegeventil (801, 801') und/oder der zweite Anschluss (Y) am zweiten Wegeventil (802, 802') der Trennventilanordnung (800, 800') angeordnet ist.

7. Luftfederanlage nach Anspruch 1 oder 6,
**dadurch gekennzeichnet, dass** das erste und/oder zweite Wegeventil (801, 801', 802, 802') in Form eines 2/2-Wegeventils gebildet ist.

8. Luftfederanlage nach einem der Ansprüche 1, 6 oder 7,
**dadurch gekennzeichnet, dass** das erste und zweite Wegeventil (801, 801', 802, 802') in Form eines Doppelanker-Magnetventils gebildet ist.

9. Luftfederanlage nach einem der Ansprüche 1, 6, 7 oder 8,
**dadurch gekennzeichnet, dass**
das erste Wegeventil (801, 801') der Trennventilanordnung (800, 800') in einer Speicher-Zweigleitung (94) und das zweite Wegeventil (802, 802') der Trennventilanordnung (800, 800') in der Pneumatikleitung (96) angeordnet ist.

10. Luftfederanlage nach Anspruch 2,
**dadurch gekennzeichnet, dass**
die Trennventilanordnung (900) mittels eines 3/4-Wegeventils gebildet ist.

11. Luftfederanlage nach Anspruch 2,
**dadurch gekennzeichnet, dass**
die Trennventilanordnung (700) zur Einnahme von drei Schaltstellungen ausgebildet ist, insbesondere mittels eines 3/3 Wegeventils gebildet ist.

12. Luftfederanlage nach einem der Ansprüche 1 bis 11,
**dadurch gekennzeichnet, dass**
eine Speicher-Zweigleitung (94) ventilfrei ist.

13. Luftfederanlage nach einem der Ansprüche 1 bis 12,
**dadurch gekennzeichnet, dass**
wenigstens ein Wegeventil der Trennventilanordnung (700, 800, 800', 900) zusammen mit einer Anzahl von Magnetventilen (93) jeweils einer Balg-Zweigleitung (90) in einem Ventilblock (97, 97") angeordnet ist

14. Druckluftversorgungsanlage (11, 21, 31, 41), die zum Betreiben einer Luftfederanlage, insbesondere nach einem der vorhergehenden Ansprüche, für ein Fahrzeug eingerichtet ist, aufweisend:
- eine Druckluftzuführung (1),
- eine mit einer Galerieleitung (95) der Pneumatikanlage (901, 902, 903, 904, 905) verbindbare Pneumatikhauptleitung (60) von einer Druckluftzuführung (1), die einen Lufttrockner (61), ein Drosselmittel (62) und einen Druckluftanschluss (2) zur Galerieleitung (95) der Pneumatikanlage (901, 902, 903, 904, 905) aufweist, und
- eine steuerbare, aus wenigstens einem Wegeventil gebildete Trennventilanordnung (700, 800, 800', 900), über welche die Pneumatikanlage (901, 902, 903, 904, 905) aus der Druckluftversorgungsanlage (11, 21, 31, 41) befüllbar und entlüftbar ist,
- eine mit der Pneumatikhauptleitung (60) und einem Entlüftungsanschluss (3) zur Umgebung pneumatisch verbundene Entlüftungsleitung (70), mit einem steuerbaren Entlüftungsventil (73, 173), wobei
- die Trennventilanordnung am Druckluftanschluss (2) zur Galerieleitung (95) angeschlossen ist, und einen ersten, zweiten und dritten Anschluss (X, Y, Z) aufweist, wobei pneumatisch angeschlossen ist:
an den zweiten Anschluss (Y) die Pneumatikhauptleitung (60),
an den dritten Anschluss (Z) der Druckluftanschluss (2) zur Galerieleitung (95) und
an den ersten Anschluss (X) ein Speicher (92) der Pneumatikanlage (901, 902, 903, 904, 905) anschließbar ist, wobei
- die Trennventilanordnung (800, 800') zur Einnahme von wenigstens drei Schaltstellungen ausgebildet ist, wobei in wenigstens einer der Schaltstellungen
der zweite Anschluss (Y) der Trennventilanordnung (700, 800, 800', 900) in einen geschlossenen Zustand schaltbar ist, in dem die Pneumatikhauptleitung (60) zwischen Galerieleitung (95) und Lufttrockner (61) bidirektional und vollständig geschlossen ist, **dadurch gekennzeichnet, dass**
die Trennventilanordnung (800, 800') mittels eines ersten und eines zweiten Wegeventils (801, 801', 802, 802') gebildet ist, wobei der dritte Anschluss (Z) pneumatisch zwischen dem ersten Wegeventil (801, 801') und dem zweiten Wegeventil (802, 802') gebildet ist oder
die Trennventilanordnung (700, 900) mittels eines einzigen Wegeventils (700, 900) gebildet ist.

15. Pneumatisches System (101, 201, 301, 302, 401, 402) mit einer Luftfederanlage, insbesondere nach einem der Ansprüche 1 bis 13, für ein Fahrzeug, die zum Betrieb mit einer Druckluftversorgungsanlage (11, 21, 31, 41) insbesondere nach Anspruch 14, eingerichtet ist, aufweisend:
- eine Pneumatikanlage (901, 902, 903, 904, 905) mit einer Galerieleitung (95), an die eine Anzahl von jeweils als Druckkammer für eine Luftfeder dienenden Bälgen (91) und eine Pneumatikleitung (96) angeschlossen ist,
- eine Druckluftversorgungsanlage (11, 21, 31, 41), die zum Betreiben der Pneumatikanlage (901, 902, 903, 904, 905), insbesondere in Form einer Luftfederanlage, für ein Fahrzeug eingerichtet ist, mit:
- einer Druckluftzuführung (1),
- einer Pneumatikhauptleitung (60) von einer Druckluftzuführung (1), die einen Lufttrockner (61), ein Drosselmittel (62) und einen Druckluftanschluss (2) aufweist, und mit
- einer mit der Pneumatikhauptleitung (60) und einem Entlüftungsanschluss (3) zur Umgebung pneumatisch verbundene Entlüftungsleitung (70), mit einem steuerbaren Entlüftungsventil (73, 173),
- eine steuerbare, aus wenigstens einem Wegeventil gebildete Trennventilanordnung über welche die Pneumatikanlage (901, 902, 903, 904, 905) aus der Druckluftversorgungsanlage (11, 21, 31, 41) befüllbar und entlüftbar ist und die in der aus Pneumatikhauptleitung (60), Druckluftanschluss (2) und Pneumatikleitung (96) gebildeten pneumatischen Verbindung zwischen dem Lufttrockner (61) Druckluftversorgungsanlage (11, 21, 31, 41) und der Galerieleitung (95) der Pneumatikanlage (901, 902, 903, 904, 905) angeschlossen ist, wobei
- die Trennventilanordnung einen ersten, zweiten und dritten Anschluss (X, Y, Z) aufweist, wobei pneumatisch angeschlossen ist:
an den ersten Anschluss (X) ein Speicher (92) der Pneumatikanlage (901, 902, 903, 904, 905),
an den zweiten Anschluss (Y) die pneumatische Verbindung zum Lufttrockner (61) der Druckluftversorgungsanlage (11, 21, 31, 41),
an den dritten Anschluss (Z) die Galerieleitung (95), und wobei
- die Trennventilanordnung (700, 800, 800', 900) zur Einnahme von wenigstens drei Schaltstellungen ausgebildet ist, wobei in wenigstens einer der Schaltstellungen der zweite Anschluss (Y) der Trennventilanordnung (700, 800, 800', 900) in einen geschlossenen Zustand schaltbar ist, in dem die pneumatische Verbindung zwischen Galerieleitung (95) und Lufttrockner (61) bidirektional und vollständig geschlossen ist, **dadurch gekennzeichnet, dass**
die Trennventilanordnung (800, 800') mittels eines ersten und eines zweiten Wegeventils (801, 801', 802, 802') gebildet ist, wobei der dritte Anschluss (Z) pneumatisch zwischen dem ersten Wegeventil (801, 801') und dem zweiten Wegeventil (802, 802') gebildet ist oder
die Trennventilanordnung (700, 900) mittels eines einzigen Wegeventils (700, 900) gebildet ist.

## Claims

1. Air suspension installation for a vehicle with a pneumatic installation (901, 902, 903, 904, 905), which is provided for operation with a compressed air supply installation (11, 21, 31, 41), in particular according to Claim 14, comprising:
- a gallery line (95) to which
a plurality of bellows (91), each acting as a pressure chamber for an air spring and a controllable isolating valve assembly (700, 800, 800', 900) consisting of at least one control valve are connected in such a way that the pneumatic installation (901, 902, 903, 904, 905) can be filled and vented from the compressed air supply installation (11, 21, 31, 41) via the isolating valve assembly (700, 800, 800', 900), wherein
- the isolating valve assembly comprises a first, second and third port (X, Y, Z), wherein:
a reservoir (92) is pneumatically connected to the first port (X),
a compressed air connection (2) to an air dryer (61) of the compressed air supply installation (11, 21, 31, 41) is pneumatically connected to the second port (Y) via a pneumatic line (96), and
the gallery line (95) is pneumatically connected to the third port (Z), and wherein
the isolating valve assembly (700, 800, 800', 900) is designed to adopt at least three switch positions, wherein in at least one of the switch positions the second port (Y) of the isolating valve assembly (700, 800, 800', 900) can be switched into a closed state in which the pneumatic line (96) between the gallery line (95) and the air dryer (61) is bidirectionally and fully closed, **characterized in that** the isolating valve assembly (800, 800') is formed by means of a first and a second control valve (801, 801', 802, 802'), wherein the third port (Z) is formed pneumatically between the first control valve (801, 801') and the second control valve (802, 802').

2. Air suspension installation for a vehicle with a pneumatic installation (901, 902, 903, 904, 905), which is provided for operation with a compressed air supply installation (11, 21, 31, 41), in particular according to Claim 14, comprising:
- a gallery line (95) to which
a plurality of bellows (91), each acting as a pressure chamber for an air spring and a controllable isolating valve assembly (700, 800, 800', 900) consisting of at least one control valve are connected in such a way that the pneumatic installation (901, 902, 903, 904, 905) can be filled and vented from the compressed air supply installation (11, 21, 31, 41) via the isolating valve assembly (700, 800, 800', 900), wherein
- the isolating valve assembly comprises a first, second and third port (X, Y, Z), wherein:
a reservoir (92) is pneumatically connected to the first port (X),
a compressed air connection (2) to an air dryer (61) of the compressed air supply installation (11, 21, 31, 41) is pneumatically connected to the second port (Y) via a pneumatic line (96), and
the gallery line (95) is pneumatically connected to the third port (Z), and wherein
the isolating valve assembly (700, 800, 800', 900) is designed to adopt at least three switch positions, wherein in at least one of the switch positions the second port (Y) of the isolating valve assembly (700, 800, 800', 900) can be switched into a closed state in which the pneumatic line (96) between the gallery line (95) and the air dryer (61) is bidirectionally and fully closed, **characterized in that** the isolating valve assembly (700, 900) is formed by means of a single control valve (700, 900).

3. Air suspension installation according to Claim 1 or 2,
**characterized in that**
the isolating valve assembly (700, 800, 800', 900) is the only valve assembly between the gallery line (95) and the air dryer (61), in particular between the gallery line (95) and the compressed air connection (2) to the air dryer (61), preferably the only valve assembly in a single pneumatic line (96) between the gallery line (95) and the compressed air connection (2) to the air dryer (61).

4. Air suspension installation according to Claim 1 or 2 or 3,
**characterized in that** a bellows (91) of the plurality of bellows (91) is connected via a control valve in the form of a solenoid valve (93) in a bellows branch line (90) to the gallery (95) and/or the reservoir (92) is connected via a reservoir branch line (94) to the first port (X) of the isolating valve assembly (700, 800, 800', 900).

5. Air suspension installation according to any one of the Claims 1 to 4,
**characterized in that**
the isolating valve assembly (800, 800', 900) is designed to adopt four switch positions.

6. Air suspension installation according to Claim 1, **characterized in that** the first port (X) is disposed on the first control valve (801, 801') and/or the second port (Y) is disposed on the second control valve (802, 802') of the isolating valve assembly (800, 800').

7. Air suspension installation according to Claim 1 or 6,
**characterized in that** the first and/or second control valve (801, 801', 802, 802') is in the form of a 2/2-way valve.

8. Air suspension installation according to any one of the Claims 1, 6 or 7,
**characterized in that** the first and second control valves (801, 801', 802, 802') form a dual armature solenoid valve.

9. Air suspension installation according to any one of the Claims 1, 6, 7 or 8,
**characterized in that**
the first control valve (801, 801') of the isolating valve assembly (800, 800') is disposed in a reservoir branch line (94) and the second control valve (802, 802') of the isolating valve assembly (800, 800') is disposed in the pneumatic line (96).

10. Air suspension installation according to Claim 2,
**characterized in that**
the isolating valve assembly (900) is formed by means of a 3/4-way valve.

11. Air suspension installation according to Claim 2,
**characterized in that**
the isolating valve assembly (700) is designed to adopt three switch positions, in particular by means of a 3/3-way valve.

12. Air suspension installation according to any one of the Claims 1 to 11,
**characterized in that**
a reservoir branch line (94) comprises no valves.

13. Air suspension installation according to any one of the Claims 1 to 12,
**characterized in that**
at least one control valve of the isolating valve assembly (700, 800, 800', 900) together with a plurality of solenoid valves (93) each of a respective bellows branch line (90) is disposed in a valve block (97, 97").

14. Compressed air supply installation (11, 21, 31, 41), which is provided to operate an air suspension installation for a vehicle, in particular according to any one of the preceding claims, comprising:
- a compressed air feed (1),
- a main pneumatic line (60) of a compressed air feed (1) that can be connected to a gallery line (95) of the pneumatic installation (901, 902, 903, 904, 905) and that comprises an air dryer (61), a restricting means (62) and a compressed air connection (2) to the gallery line (95) of the pneumatic installation (901, 902, 903, 904, 905), and
- a controllable isolating valve assembly (700, 800, 800', 900), consisting of at least one control valve, via which the pneumatic installation (901, 902, 903, 904, 905) can be filled or vented from the compressed air supply installation (11, 21, 31, 41),
- a venting line (70) pneumatically connected to the main pneumatic line (60) and a venting connection (3) to the surroundings, having a controllable venting valve (73, 173), wherein
- the isolating valve assembly is connected to the compressed air connection (2) to the gallery line (95), and comprises a first, second and third port (X, Y, Z), wherein:
the main pneumatic line (60) is pneumatically connected to the second port (Y),
the compressed air connection (2) to the gallery line (95) is pneumatically connected to the third port (Z) and
a reservoir (92) of the pneumatic installation (901, 902, 903, 904, 905) can be connected to the first port (X), wherein
- the isolating valve assembly (800, 800') is designed to adopt at least three switch positions, wherein in at least one of the switch positions
the second port (Y) of the isolating valve assembly (700, 800, 800', 900) can be switched into a closed state, in which the main pneumatic line (60) between the gallery line (95) and the air dryer (61) is bidirectionally and fully closed, **characterized in that** the isolating valve assembly (800, 800') is formed by means of a first and a second control valve (801, 801', 802, 802'), wherein the third port (Z) is formed pneumatically between the first control valve (801, 801') and the second control valve (802, 802') or the isolating valve assembly (700, 900) is formed by means of a single control valve (700, 900).

15. Pneumatic system (101, 201, 301, 302, 401, 402) with
an air suspension installation, in particular according to any one of the Claims 1 through 13, for a vehicle, which is provided for operation with a compressed air supply installation (11, 21, 31, 41), in particular according to Claim 14, comprising:
- a pneumatic installation (901, 902, 903, 904, 905) with a gallery line (95), to which are connected a plurality of bellows (91), each acting as a pressure chamber for an air spring, and a pneumatic line (96),
- a compressed air supply installation (11, 21, 31, 41), which is provided for operating the pneumatic installation (901, 902, 903, 904, 905), in particular in the form of an air suspension installation, for a vehicle, with:
- a compressed air feed (1),
- a main pneumatic line (60) from a compressed air feed (1), which comprises an air dryer (61), a restricting means (62) and a compressed air connection (2), and with
- a venting line (70) pneumatically connected to the main pneumatic line (60) and a venting connection (3) to the surroundings, with a controllable venting valve (73, 173),
- a controllable isolating valve assembly, consisting of at least one control valve, via which the pneumatic installation (901, 902, 903, 904, 905) can be filled and vented from the compressed air supply installation (11, 21, 31, 41) and which is connected into the pneumatic connection, consisting of the main pneumatic line (60), compressed air connection (2) and pneumatic line (96), between the air dryer (61) compressed air supply installation (11, 21, 31, 41) and the gallery line (95) of the pneumatic installation (901, 902, 903, 904, 905), wherein
- the isolating valve assembly comprises a first, second and third port (X, Y, Z), wherein:
a reservoir (92) of the pneumatic installation (901, 902, 903, 904, 905) is pneumatically connected to the first port (X),
the pneumatic connection to the air dryer (61) of the compressed air supply installation (11, 21, 31, 41) is pneumatically connected to the second port (Y),
the gallery line (95) is pneumatically connected to the third port (Z), and wherein
- the isolating valve assembly (700, 800, 800', 900) is designed to adopt at least three switch positions, wherein in at least one of the switch positions
the second port (Y) of the isolating valve assembly (700, 800, 800', 900) can be switched into a closed state, in which the pneumatic connection between the gallery line (95) and the air dryer (61) is bidirectionally and fully closed, **characterized in that**
the isolating valve assembly (800, 800') is formed by means of a first and a second control valve (801, 801', 802, 802'), wherein the third port (Z) is formed pneumatically between the first control valve (801, 801') and the second control valve (802, 802') or the isolating valve assembly (700, 900) is formed by means of a single control valve (700, 900).

## Revendications

1. Suspension pneumatique pour un véhicule avec une installation pneumatique (901, 902, 903, 904, 905), qui est conçue pour fonctionner avec une installation d'alimentation d'air comprimé (11, 21, 31, 41), en particulier selon la revendication 14, présentant:
- une conduite de rampe (95), à laquelle sont raccordés un nombre de soufflets (91) servant respectivement de chambre de pression pour un ressort pneumatique et un agencement de soupapes de séparation réglable formé d'au moins un distributeur (700, 800, 800', 900), de telle manière que l'installation pneumatique (901, 902, 903, 904, 905) puisse être remplie et purgée par l'installation d'alimentation d'air comprimé (11, 21, 31, 41) via l'agencement de soupapes de séparation (700, 800, 800', 900), dans laquelle
- l'agencement de soupapes de séparation présente un premier, un deuxième et un troisième raccords (X, Y, Z), dans laquelle sont raccordés pneumatiquement:
au premier raccord (X) un réservoir (92),
au deuxième raccord (Y) via une conduite pneumatique (96) un raccord d'air comprimé (2) vers un sécheur d'air (61) de l'installation d'alimentation d'air comprimé (11, 21, 31, 41), et
au troisième raccord (Z) la conduite de rampe (95), et
dans laquelle l'agencement de soupapes de séparation (700, 800, 800', 900) est conçu en vue de prendre au moins trois positions de commutation, dans laquelle dans au moins une des positions de commutation le deuxième raccord (Y) de l'agencement de soupapes de séparation (700, 800, 800', 900) peut être commuté dans un état fermé, dans lequel la conduite pneumatique (96) entre la conduite de rampe (95) et le sécheur d'air (61) est fermée dans les deux directions et entièrement,
**caractérisée en ce que** l'agencement de soupapes de séparation (800, 800') est formé au moyen d'un premier et d'un deuxième distributeurs (801, 801', 802, 802'), dans laquelle le troisième raccord (Z) est formé pneumatiquement entre le premier distributeur (801, 801') et le deuxième distributeur (802, 802').

2. Suspension pneumatique pour un véhicule avec une installation pneumatique (901, 902, 903, 904, 905), qui est conçue pour fonctionner avec une installation d'alimentation d'air comprimé (11, 21, 31, 41), en particulier selon la revendication 14, présentant:
- une conduite de rampe (95), à laquelle sont raccordés un nombre de soufflets (91) servant respectivement de chambre de pression pour un ressort pneumatique et un agencement de soupapes de séparation réglable formé d'au moins un distributeur (700, 800, 800', 900), de telle manière que l'installation pneumatique (901, 902, 903, 904, 905) puisse être remplie et purgée par l'installation d'alimentation d'air comprimé (11, 21, 31, 41) via l'agencement de soupapes de séparation (700, 800, 800', 900), dans laquelle
- l'agencement de soupapes de séparation présente un premier, un deuxième et un troisième raccords (X, Y, Z), dans laquelle sont raccordés pneumatiquement:
au premier raccord (X) un réservoir (92),
au deuxième raccord (Y) via une conduite pneumatique (96) un raccord d'air comprimé (2) vers un sécheur d'air (61) de l'installation d'alimentation d'air comprimé (11, 21, 31, 41), et
au troisième raccord (Z) la conduite de rampe (95), et
dans laquelle l'agencement de soupapes de séparation (700, 800, 800', 900) est conçu en vue de prendre au moins trois positions de commutation, dans laquelle dans au moins une des positions de commutation le deuxième raccord (Y) de l'agencement de soupapes de séparation (700, 800, 800', 900) peut être commuté dans un état fermé, dans lequel la conduite pneumatique (96) entre la conduite de rampe (95) et le sécheur d'air (61) est fermée dans les deux directions et entièrement,
**caractérisée en ce que** l'agencement de soupapes de séparation (700, 900) est formé au moyen d'un seul distributeur (700, 900).

3. Suspension pneumatique selon la revendication 1 ou 2, **caractérisée en ce que** l'agencement de soupapes de séparation (700, 800, 800', 900) est le seul agencement de soupapes entre la conduite de rampe (95) et le sécheur d'air (61), en particulier entre la conduite de rampe (95) et le raccord d'air comprimé (2) vers le sécheur d'air (61), de préférence le seul agencement de soupapes dans une seule conduite pneumatique (96) entre la conduite de rampe (95) et le raccord d'air comprimé (2) vers le sécheur d'air (61).

4. Suspension pneumatique selon la revendication 1 ou 2 ou 3, **caractérisée en ce qu'**un soufflet (91) du nombre de soufflets (91) est raccordé à la conduite de rampe (95) par un distributeur sous la forme d'une vanne magnétique (93) dans une conduite de branchement de soufflet (90) et/ou le réservoir (92) est raccordé par une conduite de branchement de réservoir (94) au premier raccord (X) de l'agencement de soupapes de séparation (700, 800, 800', 900).

5. Suspension pneumatique selon l'une quelconque des revendications 1 à 4, **caractérisée en ce que** l'agencement de soupapes de séparation (800, 800', 900) est configuré pour prendre quatre positions de commutation.

6. Suspension pneumatique selon la revendication 1, **caractérisée en ce que** le premier raccord (X) est disposé sur le premier distributeur (801, 801') et/ou le deuxième raccord (Y) est disposé sur le deuxième distributeur (802, 802') de l'agencement de soupapes de séparation (800, 800').

7. Suspension pneumatique selon la revendication 1 ou 6, **caractérisée en ce que** le premier et/ou le deuxième distributeur (801, 801', 802, 802') est réalisé sous la forme d'un distributeur à 2/2 voies.

8. Suspension pneumatique selon l'une quelconque des revendications 1, 6 ou 7, **caractérisée en ce que** le premier et le deuxième distributeurs (801, 801', 802, 802') sont réalisés sous la forme d'une soupape magnétique à double induit.

9. Suspension pneumatique selon l'une quelconque des revendications 1, 6, 7 ou 8, **caractérisée en ce que** le premier distributeur (801, 801') de l'agencement de soupapes de séparation (800, 800') est disposé dans une conduite de branchement de réservoir (94) et le deuxième distributeur (802, 802') de l'agencement de soupapes de séparation (800, 800') est disposé dans la conduite pneumatique (96).

10. Suspension pneumatique selon la revendication 2, **caractérisée en ce que** l'agencement de soupapes de séparation (900) est formé au moyen d'un distributeur à 3/4 voies.

11. Suspension pneumatique selon la revendication 2, **caractérisée en ce que** l'agencement de soupapes de séparation (700) est formé pour prendre trois positions de commutation, en particulier sous la forme d'un distributeur à 3/3 voies.

12. Suspension pneumatique selon l'une quelconque des revendications 1 à 11, **caractérisée en ce qu'**une conduite de branchement de réservoir (94) est dépourvue de soupape.

13. Suspension pneumatique selon l'une quelconque des revendications 1 à 12, **caractérisée en ce qu'**au moins un distributeur de l'agencement de soupapes de séparation (700, 800, 800', 900) avec un nombre de soupapes magnétiques (93) respectivement d'une conduite de branchement de soufflet (90) est disposé dans un bloc de soupapes (97, 97").

14. Installation d'alimentation d'air comprimé (11, 21, 31, 41), qui est conçue pour faire fonctionner une suspension pneumatique, en particulier selon l'une quelconque des revendications précédentes, pour un véhicule, présentant:
- une arrivée d'air comprimé (1),
- une conduite principale pneumatique (60) pouvant être raccordée à une conduite de rampe (95) de l'installation pneumatique (901, 902, 903, 904, 905) depuis une arrivée d'air comprimé (1), qui présente un sécheur d'air (61), un moyen d'étranglement (62) et un raccord d'air comprimé (2) vers la conduite de rampe (95) de l'installation pneumatique (901, 902, 903, 904, 905), et
- un agencement de soupapes de séparation réglable (700, 800, 800', 900), formé par au moins un distributeur, par lequel l'installation pneumatique (901, 902, 903, 904, 905) peut être remplie à partir de l'installation d'alimentation d'air comprimé (11, 21, 31, 41) et purgée,
- une conduite de purge (70) raccordée pneumatiquement à la conduite principale pneumatique (60) et à un raccord de purge d'air (3) vers l'atmosphère, avec une soupape de purge réglable (73, 173), dans laquelle
- l'agencement de soupapes de séparation est raccordé au raccord d'air comprimé (2) vers la conduite de rampe (95), et présente un premier, un deuxième et un troisième raccords (X, Y, Z), dans laquelle sont raccordés
au deuxième raccord (Y) la conduite principale pneumatique (60),
au troisième raccord (Z) le raccord d'air comprimé (2) vers la conduite de rampe (95), et
un réservoir (92) de l'installation pneumatique (901, 902, 903, 904, 905) peut être raccordé au premier raccord (X), dans laquelle
- l'agencement de soupapes de séparation (800, 800') est configuré pour prendre au moins trois positions de commutation, dans laquelle dans au moins une des positions de commutation le deuxième raccord (Y) de l'agencement de soupapes de séparation (700, 800, 800', 900) peut être commuté dans un état fermé, dans lequel la conduite principale pneumatique (60) entre la conduite de rampe (95) et le sécheur d'air (61) est fermée dans les deux directions et entièrement, **caractérisée en ce que** l'agencement de soupapes de séparation (800, 800') est formé au moyen d'un premier et d'un deuxième distributeurs (801, 801', 802, 802'), dans laquelle le troisième raccord (Z) est formé pneumatiquement entre le premier distributeur (801, 801') et le deuxième distributeur (802, 802') ou l'agencement de soupapes de séparation (700, 900) est formé au moyen d'un seul distributeur (700, 900).

15. Système pneumatique (101, 201, 301, 302, 401, 402) avec une suspension pneumatique, en particulier selon l'une quelconque des revendications 1 à 13, pour un véhicule, qui est conçue pour fonctionner avec une installation d'alimentation d'air comprimé (11, 21, 31, 41), en particulier selon la revendication 14, présentant:
- une installation pneumatique (901, 902, 903, 904, 905) avec une conduite de rampe (95), à laquelle sont raccordés un nombre de soufflets (91) servant respectivement de chambre de pression pour un ressort pneumatique ainsi qu'une conduite pneumatique (96),
- une installation d'alimentation d'air comprimé (11, 21, 31, 41), qui est conçue pour faire fonctionner l'installation pneumatique (901, 902, 903, 904, 905), en particulier sous la forme d'une suspension pneumatique, pour un véhicule, avec:
une arrivée d'air comprimé (1),
une conduite principale pneumatique (60) à partir d'une arrivée d'air comprimé (1), qui présente un sécheur d'air (61), un moyen d'étranglement (62) et un raccord d'air comprimé (2), et avec
une conduite de purge (70) raccordée pneumatiquement à la conduite principale pneumatique (60) et à un raccord de purge d'air (3) vers l'atmosphère, avec une soupape de purge réglable (73, 173),
- un agencement de soupapes de séparation réglable formé par au moins un distributeur, par lequel l'installation pneumatique (901, 902, 903, 904, 905) peut être remplie à partir de l'installation d'alimentation d'air comprimé (11, 21, 31, 41) et purgée et qui est raccordé dans la liaison pneumatique formée par la conduite principale pneumatique (60), le raccord de pression (2) et la conduite pneumatique (96) entre le sécheur d'air (61) de l'installation d'alimentation d'air comprimé (11, 21, 31, 41) et la conduite de rampe (95) de l'installation pneumatique (901, 902, 903, 904, 905), dans lequel
- l'agencement de soupapes de séparation présente un premier, un deuxième et un troisième raccords (X, Y, Z), dans laquelle sont raccordés pneumatiquement:
au premier raccord (X) un réservoir (92) de l'installation pneumatique (901, 902, 903, 904, 905),
au deuxième raccord (Y) la liaison pneumatique vers le sécheur d'air (61) de l'installation d'alimentation d'air comprimé (11, 21, 31, 41), et au troisième raccord (Z) la conduite de rampe (95), et
dans laquelle l'agencement de soupapes de séparation (700, 800, 800', 900) est conçu en vue de prendre au moins trois positions de commutation, dans laquelle dans au moins une des positions de commutation
le deuxième raccord (Y) de l'agencement de soupapes de séparation (700, 800, 800', 900) peut être commuté dans un état fermé, dans lequel la liaison pneumatique entre la conduite de rampe (95) et le sécheur d'air (61) est fermée dans les deux directions et entièrement,
**caractérisé en ce que** l'agencement de soupapes de séparation (800, 800') est formé au moyen d'un premier et d'un deuxième distributeurs (801, 801', 802, 802'), dans laquelle le troisième raccord (Z) est formé pneumatiquement entre le premier distributeur (801, 801') et le deuxième distributeur (802, 802') ou l'agencement de soupapes de séparation (700, 900) est formé au moyen d'un seul distributeur (700, 900).
